(19) Europäisches Patentamt

European Patent Office

Office européen des brevets

(11) **EP 1 242 767 B1**

(12) **EUROPÄISCHE PATENTSCHRIFT**

(45) Veröffentlichungstag und Bekanntmachung des Hinweises auf die Patenterteilung:
**16.06.2004 Patentblatt 2004/25**

(21) Anmeldenummer: **00993436.5**

(22) Anmeldetag: **13.12.2000**

(51) Int Cl.⁷: **F16T 1/00**, F04B 39/16

(86) Internationale Anmeldenummer:
**PCT/DE2000/004435**

(87) Internationale Veröffentlichungsnummer:
**WO 2001/044712 (21.06.2001 Gazette 2001/25)**

(54) **VERFAHREN ZUM ABLEITEN VON KONDENSAT UND KONDENSATABLEITER**

METHOD FOR DRAINING A CONDENSATE AND A CONDENSATE DRAIN

PROCEDE ET DISPOSITIF POUR EVACUER UN CONDENSAT

(84) Benannte Vertragsstaaten:
**DE GB**

(30) Priorität: **17.12.1999 DE 19960937**

(43) Veröffentlichungstag der Anmeldung:
**25.09.2002 Patentblatt 2002/39**

(73) Patentinhaber: **Beko Technologies GmbH**
**41468 Neuss (DE)**

(72) Erfinder:
• **SCHLENSKER, Herbert**
**51482 Leverkusen (DE)**
• **KOCH, Berthold**
**41468 Neuss (DE)**

(74) Vertreter: **Bauer, Wulf, Dr.**
**Lindenallee 43**
**50968 Köln-Marienburg (DE)**

(56) Entgegenhaltungen:
**US-A- 5 080 126**

• **PATENT ABSTRACTS OF JAPAN vol. 018, no. 691 (M-1731), 26. Dezember 1994 (1994-12-26) & JP 06 272668 A (MIKUNI JUKOGYO KK), 27. September 1994 (1994-09-27)**

EP 1 242 767 B1

**Beschreibung**

Gegenstand der vorliegenden Erfindung ist ein Verfahren zum Ableiten von Kondensat aus einem Sammelraum eines Druckluft- oder Druckgassystems, welcher sich je nach Betriebszustand des Druckluft- oder Druckgassystems auf einem über Atmosphärendruck liegenden Überdruck, einem unter Atmosphärendruck liegenden Unterdruck oder auf Atmosphärendruck selbst befinden kann, sowie eine Vorrichtung hierzu.

Insbesondere ist das erfindungsgemäße Verfahren und die erlindungsgemäße Vorrichtung zum Ableiten von Kondensat aus einem Sammelraum eines mehrstufigen Druckluft- oder Druckgasverdichters, im weiteren Druckgasverdichter genannt, vorgesehen. Im folgenden werden das erfindungsgemäße Verfahren und die erfindungsgemäße Vorrichtung anhand ihrer Anwendung auf mehrstufige Druckgasverdichter erläutert.

Je nach Einsatzbedingungen saugen Druckgasverdichter stets eine gewisse Wasserdampfmenge an, die teilweise nach dem Verdichtungsprozess kondensiert. Dies geschieht im verstärktem Maße, wenn einem Druckgasverdichter ein Nachkühler nachgeschaltet ist, in welchem die beim Verdichtungsprozess entstandenen erhöhten Temperaturen im Druckgas, welche typisch über 100°C betragen können, auf technisch sinnvolle Werte abgesenkt werden. Die Kühlung erfolgt z. B. durch Wärmeaustausch mit der Umgebungsluft oder mit Kühlmittelkreisläufen.

In einem mehrstufigen Druckgasverdichter erfolgt die Verdichtung schrittweise in hintereinandergeschalteten Verdichterstufen. Dabei weist jede Verdichterstufe typischerweise eine eigene Verdichtereinheit, einen Nachkühler und einen nachgeschalteten Abscheider auf. Mittels des Abscheiders wird das beim Nachkühlvorgang anfallende Kondensat vom Druckgasstrom getrennt und aus dem Druckgasverdichter herausgeführt. Dabei wird das Kondensat im allgemeinen über eine Ablaufleitung durch den Druck des Druckgases oder durch Gravitation in einen irgendwie gearteten Sammelbehälter abgeleitet. Dabei ist dieser Sammelbehälter entweder Bestandteil des Druckgassystems oder Bestandteil eines Kondensatableiters, mittels welchem das gesammelte Kondensat schließlich aus dem Druckgasverdichter abgeleitet wird.

Aufgrund der besonderen Betriebsbedingungen, welche in mehrstufigen Druckgasverdichtern auftreten können, ist die Verwendung vorbekannter Kondensatableiter mit vorgesteuertem Membranventil zum Ableiten angesammelten Kondensats aus einem Sammelraum, wie sie beispielsweise aus der EP 391 250 bekannt sind, nur eingeschränkt möglich. Dies liegt in der Tatsache begründet, dass aufgrund der Betriebsbedingungen eines Druckgasverdichters sowohl Überdruck als auch Unterdruck sowie Atmosphärendruck im Sammelraum herrschen können.

Die Verwendung von Kondensatableitern mit schwimmerbetätigten Auslassventilen ist aufgrund ihrer Anfälligkeit gegenüber Verschmutzungen, die in Druckgasanlagen praktisch unvermeidlich sind, nicht vorteilhaft.

Aus ökonomischen Gründen ist es nicht sinnvoll, einen mehrstufigen Druckgasverdichter mit voller Leistung gegen Atmosphärendruck arbeiten zu lassen, wenn kein Druckgas mehr von einem Verbraucher angefordert wird. Ein Abschalten des mehrstufigen Verdichters ist im allgemeinen ebenfalls nicht sinnvoll, da jeder Abschalt- und Anfahrprozess mit erhöhtem Motorenund Kompressorenverschleiß verbunden ist. Daher wird in diesem Fall verringerter Druckgasanforderung oftmals eine Leerlaufregelung realisiert, dergestalt dass eine Verschlussvorrichtung die Saugseite des ersten Verdichters bis auf einen geringen Öffnungsquerschnitt sperrt, während gleichzeitig eine Ablassvorrichtung auf der Druckseite der letzten Verdichterstufe geöffnet wird. Die Ablassvorrichtung kann mit der Saugseite des ersten Verdichters verbunden sein. Eine auf der Druckseite des letzten Verdichters vorgesehene Sperrvorrichtung verhindert den Rückfluss von bereits erzeugtem Druckgas in den Verdichter. Mit dieser Regelung wird erreicht, dass der mehrstufige Verdichter bei Leerlauf ohne Last mit niedrigem Druck weiterläuft, wobei sich eine deutliche Energieeinsparung ergibt. Ein erhöhter Verschleiß durch häufiges Abschalten und Hochfahren kann vermieden werden.

Ist der beschriebene Leerlaufzustand eingestellt, so läuft der Verdichter ohne Last mit niedrigem Druck weiter. Es wird nur eine geringe Druckgasmenge gefördert, wodurch ein bestimmtes Druckverhältnis zwischen den einzelnen Verdichterstufen aufrechterhalten wird. Befindet sich der mehrstufige Verdichter über einen längeren Zeitraum hinweg in diesem Regelungszustand, so können in den ersten Verdichterstufen Drücke auftreten, die unter dem Druck im angesaugten Gas, insbesondere unter Umgebungsdruck liegen.

Wird für einen längeren Zeitraum kein Druckgas mehr benötigt, kann der gesamte mehrstufige Verdichter abgeschaltet werden, um auch die für den Leerlaufbetrieb erforderliche Energie einzusparen. Sind sämtliche Verdichtereinheiten zum Stillstand gekommen, wird die Verdichtereinheit im allgemeinen auf der Druckseite der letzten Verdichterstufe über eine Ablassvorrichtung mit Umgebungsdruck belüftet. In diesem Fall liegt in allen Teilen des mehrstufigen Verdichters Umgebungsdruck vor.

In einem Sammelraum, in dem in einem Abscheider einer Verdichtereinheit anfallendes Kondensat gesammelt wird, können daher unterschiedliche Betriebsbedingungen auftreten. Befindet sich der mehrstufige Verdichter im normalen Betrieb, so befinder sich alle auf der Druckseite eines jeweiligen Verdichters angeordnete Sammelräume auf Drücken die über dem Druck des angesaugten Gases, insbesondere über Atmosphärendruck liegen. In diesem Fall könnte gesammeltes Kondensat aus allen Sammelräumen mit Kondensatableitern in vorbekannter Bauart abgeleitet werden. Die Ableitung erfolgt dabei entweder getrieben vom Überdruck gegenüber Atmosphärendruck, welcher in der Verdichterstufe vorliegt und/oder gravitativ.

Gleiches gilt auch für den Fall einer vollständigen Abschaltung eines mehrstufigen Verdichters. In diesem Fall befinden sich alle Sammelbehälter auf Atmosphärendruck, so dass eine Ableitung des Kondensats aus allen Sammelbehältern problemlos gravitativ erfolgen kann. Auch hier können ohne weiteres aus dem Stand der Technik vorbekannte Kondensatableiter eingesetzt werden, sofern sie zum Öffnen nicht einen gewissen Überdruck benötigen.

Jedoch können im beschriebenen Leerlaufbetrieb bei verringerter Druckgasanforderung wie bereits beschrieben bei einigen in der Nähe des Gaseinlasses gelegenen (d.h. niedrigen) Verdichterstufen Drücke auftreten, die unter dem Ansaugdruck, insbesondere unter Atmosphärendruck liegen. In diesem Fall wird das an einem Abscheider solcher Verdichtungsstufen anfallende Kondensat in einen Sammelbehälter abgeleitet, jedoch befindet sich das gesammelte Kondensat mit dem darüberliegenden Gasraum auf einem Druck, der unter dem Ausgangsdruck, insbesondere unter Atmosphärendruck liegt.

Wird ein aus der aus der EP 391 250 bekannter Kondensatableiter zum Ableiten des Kondensats verwendet, so tritt das Problem auf; dass diese Kondensatableiter bauartbedingt bei Auftreten eines Unterdrucks im Sammelraum ab einer bestimmten Druckdifferenz zwischen Sammelraum und der Auslassseite des Kondensatableiters, an der i.a. Atmosphärendruck herrscht, ihr Auslassventil öffnen. Durch den Unterdruck im Sammelbehälter und in der Verdichterstufe wird Umgebungsluft in die Verstärkerstufe hereingezogen, wobei gleichzeitig Kondensat mitgerissen werden kann. Auf diese Weise können einzelne Verdichtereinheiten unerwünscht auslassseitig belüftet und gleichzeitig mit Kondensat verunreinigt werden, wodurch die Verdichtereinheiten beschädigt werden können. Daher ist ein Ableiten von Kondensat aus einem Sammelbehälter, welcher sich bei einem Druck befindet, der geringer ist als Atmosphärendruck, unter allen Umständen zu vermeiden.

Vergleichbares gilt, wenn versucht wird, mittels eines konventionellen Kondensatableiters das angesammelte Kondensat aus dem unter Unterdruck stehenden Sammelbehälter unter der Wirkung der Gravitation abzuleiten

Prinzipiell ist es möglich, gesammeltes Kondensat aus den Sammelbehältern eines mehrstufigen Verdichters mit konventionellen Kondensatableitern, z.B. den aus der EP 391 250 bekannten, abzuleiten. Dabei müssen aber zusätzliche Vorsichtsmassnahmen getroffen werden, um einen Ableitvorgang gegen Atmosphärendruck sicher zu verhindern, wenn sich ein Sammelbehälter auf Unterdruck befindet. Hierzu wird oftmals ein Rückschlagventil hinter dem Kondensatableiter angeordnet, welches ein unerwünschtes Öffnen des Kondensatableiters und das Eindringen von Umgebungsluft in den unter Unterdruck stehenden Sammelbehälter sicher verhindern.

Ist der mehrstufige Verdichter abgeschaltet, so befindet sich der Sammelraum auf Atmosphärendruck. Werden vorbekannte Kondensatableiter mit vorgesteuertem Membranventil z.B. gemäß der EP 391 250 in Kombination mit einem Rückschlagventil zum Ableiten des Kondensats verwendet, so tritt das Problem auf, dass die zum Ableiten verwendeten vorgesteuerten Membranventile einen bestimmten Überdruck im Sammelraum gegenüber dem Druck auf der Auslassseite, i.a. also Atmosphärendruck, benötigen. Damit ist ein Ableiten von Kondensat im Stillstand des Druckgasverdichters nicht mehr möglich. Dies stellt jedoch ein Risiko dar, da auch im Stillstand der Anlage, zumindest unmittelbar nach dem Abschalten, weiter gewisse Mengen an Kondensat anfallen können.

Aufgabe der vorliegenden Erfindung soll es daher sein, ein Verfahren anzugeben, welches es erlaubt, Kondensat aus einen Sammelraum abzuleiten, welcher sich abhängig vom Betriebszustand des zugehörigen Druckgassystems bei einem Überdruck, einem Unterdruck oder bei Atmosphärendruck befindet. Dabei sollen Betriebszustände, in denen ein Eindringen von Umgebungsluft, eventuell vermischt mit Kondensat, in die Druckgasanlage durch den Sammelraum auftreten kann, mit Sicherheit vermieden werden.

Weiterhin soll ein Verfahren angegeben werden, welches ein Ableiten von Kondensat aus einem mehrstufigen Verdichter im Lastbetrieb und im abgeschalteten Zustand des Verdichters erlaubt, und welches sich auf einfache Weise weiterbilden lässt, so dass ein Ableiten auch in solchen Betriebszuständen des Verdichters möglich ist, in denen sich der Sammelraum auf einem Unterdruck befindet.

Schließlich soll ein Kondensatableiter zur Ausführung des Verfahrens angegeben werden.

Insbesondere soll ein Kondensatableiter für einen mehrstufigen Verdichter angegeben werden, der im Lastbetrieb und im abgeschalteten Zustand des mehrstufigen Verdichters ein sicheres Ableiten des anfallenden Kondensats ermöglicht, und im Leerlaufbetrieb das Ansaugen von Umgebungsluft auf der Druckseite einer Verdichtereinheit, eventuell vermischt mit Kondensat, sicher verhindert. Vorzugsweise soll dies mit geringst möglichem schalttechnischen Aufwand realisiert werden. Weiterhin soll ein erfindungsgemässer Kondensatableiter auf einfache Weise dahingehend weitergebildet werden können, dass ein zuverlässiges Ableiten von Kondensat auch im Leerlaufzustand des mehrstufigen Verdichters möglich ist.

Gelöst wird diese Aufgabe durch ein Verfahren gemäss des Hauptanspruchs, sowie durch eine Vorrichtung gemäss des unabhängigen Anspruchs 5.

Angewendet werden kann das Verfahren bei jedem Druckgassystem, in welchem Kondensat anfällt, welches in einem Sammelraum für Kondensat gesammelt wird, wobei sich der Sammelraum je nach Betriebszustand des Druckgassystems bei einem Überdruck, einem Unterdruck oder bei Atmosphärendruck befindet.

Das Verfahren umfasst die folgenden Verfahrensschritte:

a) Sammeln von Kondensat im Sammelraum,

b) Erfassen des Füllstands von Kondensat im Sammelraum mittels eines Füllstandsmessers und einer nachgeschalteten Elektronikeinheit,

c) Bereitstellen eines Steuerdrucks p(Steuer), der in allen Betriebszuständen des Druckgassystems über dem Druck p(Sammelraum) im Sammelraum und über Atmosphärendruck p(Luft) liegt,

d) von der Elektronikeinheit gesteuertes Bereitstellen eines Drucks p(Eingang) an einem Steuerleitungseingang eines dem Sammelraum zugeordneten Auslassventils, welches dazu vorgesehen ist, im Sammelraum angesammeltes Kondensat abzuleiten,

wobei der Druck p(Eingang):

i) im wesentlichen den Steuerdruck p(Steuer) entspricht, wenn der maximale Füllstand im Sammelraum noch nicht erreicht oder unterschritten ist,

ii) im wesentlichen Atmosphärendruck p(Luft) entspricht, wenn der maximale Füllstand im Sammelraum erreicht oder überschritten ist,

und wobei die Stellung des Auslassventils vom Druck p(Sammelraum) im Sammelraum, dem Druck p(Eingang) am Steuerleitungseingang, dem Druck auf der Auslassseite des Auslassventils, der insbesondere Atmosphärendruck p(Luft) sein kann, und einem Schwellwert P, gesteuert wird, insbesondere das Auslassventil für das Ableiten von Kondensat:

iii) geschlossen wird, wenn der Druck p(Eingang) über dem Druck p(Sammelraum) im Sammelraum plus dem Schwellwert P liegt, und

iv) geöffnet wird, wenn der Druck p(Eingang) unter dem Druck p(Sammelraum) im Sammelraum plus den Schwellwert P liegt.

Insbesondere kann das Verfahren bei jedem mehrstufigen Verdichter angewendet werden, welcher mehrere hintereinander geschaltete Verdichterstufen aufweist, insbesondere mindestens zwei. Dabei muss mindestens die bei geringeren Drücken arbeitende Verdichtereinheit einen Abscheider aufweisen.

Insbesondere geeignet ist das Verfahren zur Anwendung mit einem mehrstufigen Verdichter zur Kompression eines Gases, z. B. Luft, welcher hintereinandergeschaltete Verdichterstufen aufweist, die jeweils eine Verdichtereinheit n mit nachfolgendem Nachkühler und nachgeschaltetem Abscheider umfassen. Das im Abscheider anfallende Kondensat wird beispielsweise über eine Ablaufleitung in einen irgendwie gearteten Sammelraum abgeleitet. Dabei herrscht im über dem Kondensat stehenden Gasraum im Sammelraum ein Gasdruck p(Sammelraum), welcher im wesentlichen dem auslassseitigen Gasdruck p(i) der zugehörigen i-ten Verdichterstufe entspricht. Das Verfahren verwendet in diesem Fall vorteilhaft als Steuerdruck p(Steuer) im wesentlichen den auslassseitigen Gasdruck p(j) der Verdichterstufe j. Dabei erreicht die j-ten Verdichterstufe im Betrieb des mehrstufigen Verdichters auslassseitig einen höheren Gasdruck p(j) als die i-te Verdichterstufe, welche auslassseitig den Gasdruck p(i) erreicht.

Bei geeigneter Wahl des Schwellwerts P kann sichergestellt werden, dass in allen Betriebszuständen des Druckgassystems nur dann Kondensat aus dem Sammelraum abgeleitet wird, wenn der Füllstand des Kondensats im Sammelraum einen Maximalwert erreicht oder überschritten hat und der Sammelraum nicht unter einem Unterdruck gegenüber der Auslassseite des Auslassventils, d.h. i.a. Atmosphärendruck, steht.

Vorzugsweise wird der Schwellwert P so gewählt, dass in allen Betriebszuständen (Lastbetrieb, Leerlauf) des Druckgassystems gilt:

a) p(Sammelraum) + P < p(Eingang), wenn p(Eingang) = p(Steuer) [wobei p(Steuer) > p(Luft)],

b)

i) p(Sammelraum) + P > p(Eingang), wenn p(Eingang) = p(Luft) und p(Sammelraum) ≥ p(Luft), insbesondere p(Sammelraum) = p(Über)

ii) p(Sammelraum) + P < p(Eingang), wenn p(Eingang) = p(Luft) und p(Sammelraum) = p(Unter), vorzugsweise p(Sammelraum) < p(Luft)

Hierbei sind die Relationszeichen als "entspricht im wesentlichen" zu verstehen. Weiterhin kann auch bei einem z.B. durch eine Feder (wie im folgenden beschrieben) vorgegebenen Schwellwert P der Steuerdruck p(Steuer) angepasst gewählt werden.

Eine zur Umsetzung des Verfahrens erforderliche Vorrichtung kommt mit einem Minimum an elektrischen Einrichtungen aus, das gesamte Verfahren kann mit einem fast vollständig druckgas-mechanisch arbeitenden Kondensatableiter ausgeführt werden. Hierdurch ergeben sich außerordentliche Vorteile bezüglich der Zuverlässigkeit und der Wartungsfreiheit der Konstruktion, sowie eine weitgehende Unempfindlichkeit gegenüber möglichen Störungen der Stromversorgung.

Zur Umsetzung des erfindungsgemässen Verfahrens ist ein Kondensatableiter geeignet, welcher die folgenden Komponenten aufweist:

a) einen Füllstandsmesser, der dazu vorgesehen ist, den Füllstand von Kondensat im Sammelraum zu erfassen, insbesondere das Erreichen oder Überschreiten eines maximalen Füllstands im Sammelraum,
b) ein Steuerventil, welches in einer Steuerleitung angeordnet ist, über die dem Kondensatableiter ein Steuerdruck p(Steuer) zugeführt wird, der in allen Betriebszuständen der Druckgasanlage über dem Druck im Sammelraum p(Sammelraum) liegt, d.h.

$$p(Steuer) > p(Sammelraum),$$

in jedem Fall aber über Atmosphärendruck p(Luft) liegt, wobei das Steuerventil dazu vorgesehen ist, den Durchfluss des Steuerdrucks p(Steuer) durch die Steuerleitung zu regeln,
c) ein Auslassventil, welches dem Sammelraum zugeordnet ist und dazu vorgesehen ist, Kondensat aus dem Sammelraum insbesondere gegen Atmosphärendruck p(Luft) abzuleiten, wobei das Auslassventil so ausgeführt ist, dass es einen Steuerleitungseingang aufweist, welcher über das Steuerventil mit der Steuerleitung verbunden ist, dergestalt dass bei geöffnetem Steuerventil im wesentlichen der Steuerdruck p(Steuer) am Steuerleitungseingang anliegt,
d) ein Entlüftungsventil, welches zwischen Steuerventil und Steuerleitungseingang in der Steuerleitung angeordnet ist, und welches bei gesperrtem Steuerventil die Steuerleitung zwischen Steuerventil und Steuerleitungseingang auf Atmosphärendruck p(Luft) entlüftet,
e) eine Elektronikeinheit, welche das Signal des Füllstandsmessers auswertet und bei Erreichen oder Überschreiten des maximalen Füllstands im Sammelraum das Steuerventil schließt,

wobei das Auslassventil folgende Regelstellungen aufweist:

i) Sperrstellung für Kondensat, wenn der am Steuerleitungseingang anliegende Druck p(Eingang) größer ist als der im Sammelraum herrschende Druck p(Sammelraum) plus einem voreingestellten Schwellwert P,
ii) Durchlassstellung für Kondensat, wenn der am Steuerleitungseingang anliegende Druck p(Eingang) kleiner ist als der im Sammelraum herrschende Druck p(Sammelraum) plus Schwellwert P.

Entsprechend des voranstehend beschriebenen Verfahrens kann bei der Realisierung der Vorrichtung durch geeignete Wahl des Schwellwertes P erreicht werden, dass die erfindungsgemässe Vorrichtung zum Ableiten von Kondensat nur dann Kondensat aus dem Sammelraum ableitet, wenn der Sammelraum mindestens auf Atmosphärendruck p(Luft) oder einem höheren Druck p(Über) liegt.

Im allgemeinen muss der Schwellwert P an die in den verschiedenen Betriebszuständen des mehrstufigen Verdichters auftretenden Drücke angepasst werden. Insbesondere ist es auch möglich, den Schwellwert P so zu wählen, dass das Auslassventil nur dann geöffnet wird, wenn ein zumindest geringfügiger Überdruck im Sammelraum herrscht. Dies ist jedoch i.a. nicht vorgesehen, kann aber in bestimmten Einsatzfällen vorteilhaft oder sogar erforderlich sein.

Befindet sich der Sammelraum auf einem unter Atmosphärendruck p(Luft) liegenden Druck p(Unter), so verhindert die Ansteuerung des Auslassventils zuverlässig, dass der Sammelraum durch den erfindungsgemässen Kondensatableiter mit Atmosphärendruck belüftet wird, wodurch eine unerwünschte Belüftung der zugeordneten Verdichtereinheit und insbesondere eine Verunreinigung mit Kondensat sicher vermieden werden kann.

Insbesondere ist der erfindungsgemäße Kondensatableiter so ausgeführt, dass der Kondensatableiter das Auslassventil bei einem Unterdruck im Sammelraum unabhängig vom Füllstand des Kondensats zuverlässig geschlossen hält.

Auch ohne zusätzliches Rückschlagventil ist ein selbsttätiges Öffnen des Ventils aufgrund der Druckdifferenz zwischen der Auslassseite des Auslassventils und dem Sammelraum nicht möglich. Dies stellt eine wesentliche Verbesserung gegenüber den vorbekannten Kondensatableitern mit vorgesteuerten Membranventilen, wie sie z.B. aus der aus der EP 391 250 bekannt sind, dar.

Weiterhin kann das Auslassventil konstruktiv bedingt nicht geöffnet werden, wenn sich der Sammelraum auf einem Unterdruck befindet. Eine Fehlbetätigung ist damit ausgeschlossen, auch ohne nachgeschaltetes Rückschlagventil wird eine Verunreinigung des Druckgassystems mit Kondensat sicher verhindert.

Schließlich ist auch dann ein Ableiten von Kondensat aus dem Sammelraum möglich, wenn sich dieser auf Atmosphärendruck befindet. Das Auslassventil ist so ausgelegt, dass es selbsttätig den Durchfluss für Kondensat freigibt, wenn im Sammelraum und am Steuerleitungseinlass Atmosphärendruck anliegen, wie dies im Stillstand des Druckgassystems der Fall ist.

Zur Erläuterung sei erwähnt, dass bei Verwendung des Drucks p(Sammelraum) als Steuerdruck p(Steuer) und entsprechender Wahl der Schwellwerts P der erfindungsgemäße Kondensatableiter im wesentlichen wie ein konventioneller Kondensatableiter, wie z.B. aus der EP 391 250 bekannt, arbeitet. Dabei wird der Schwellwert P so gewählt, dass das Auslassventil erst bei einem gewissen Überdruck p(Über) im Sammelraum öffnet, d.h. bei Druckgleichgewicht zwischen dem Sammelraum, dem Steuerleitungseingang und der Auslassseite des Auslassventils ist das Auslassventil geschlossen. Beim erfindungsgemäßen Kondensatableiter ist das Auslassventil dagegen geöffnet, wenn ein Druckgleichgewicht zwischen dem Sammelraum, dem Steuerleitungseingang und der Auslassseite des Auslassventils herrscht.

Durch Weiterbildung der aus der EP 391 250 bekannten Kondensatableiter gemäss des erfindungsgemäßen Verfahrens, dergestalt dass ein erfindungsgemäßer Kondensatableiter realisiert wird, ist es möglich, auch in dem schwierigen Einsatzfall, in dem Kondensat aus einem Sammelraum abgeleitet werden soll, der sich je nach Betriebszustand des zugehörigen Druckgassystems auf einem Unterdruck, einem Überdruck oder auf Atmosphärendruck befindet, Kondensat mittels eines Kondensatableitertyps abzuleiten, der sich im praktischen Einsatz bestens bewährt hat. In dieser vorteilhaften Weiterbildung der erfindungsgemäßen Vorrichtung ist das Auslassventil als druckluftbetriebenes Membranventil ausgeführt. Das Membranventil wird dabei vom Druck am Steuerleitungseingang p(Eingang), vom Druck im Sammelraum p(Sammelraum), vom Druck auf der Auslassseite des Auslassventils, also i.a. Atmosphärendruck p(Luft) und einer zusätzlichen Kraft K, welche den vorgenannten Schwellwert P repräsentiert, angetrieben.

Diese Kraft K kann insbesondere mittels einer Feder im Auslassventil realisiert werden. Um die beschriebene Anpassung des Schwellwertes P an die Gegebenheiten des mehrstufigen Druckgasverdichters durchführen zu können, ist der Schwellwert P vorzugsweise am Auslassventil selbst einstellbar. Dies kann beispielsweise verwirklicht werden, indem entweder die Stärke der Feder oder ihre Vorspannung variabel einstellbar ist.

Ein Übergang zu verschmutzungs- und verschleißanfälligen Kondensatableitern mit schwimmerbetätigten Auslassventilen, welche u.U. alternativ eingesetzt werden könnten, kann damit vermieden werden.

Besondere Vorteile ergeben sich, wenn die Elektronikeinheit, welche das Signal des Füllstandsmessers auswertet, das Steuerventil bei Überschreiten des maximalen Füllstandes im Sammelraum schließt und zusätzlich nach Herstellen des geschlossenen Zustandes (nach Überschreiten des maximalen Füllstandes) den geschlossenen Zustand des Steuerventils bzw. den geöffneten Zustand des Auslassventils solange beibehält, bis der Sammelraum möglichst vollständig entleert ist. Eine solche Regelung ist beispielsweise von den Kondensatableitern aus der EP 391 250 oder der DE 196 45 815 bekannt und muss daher an dieser Stelle nicht explizit erläutert werden. Insbesondere kann eine solche Regelung Gebrauch von einem zweiten Füllstandsmesser zur Erfassung eines unteren Füllstands und/ oder einer Zeitschaltung machen. Die erfindungsgemäße Vorrichtung kann mit allen vorbekannten Regelungen, die den genannten Zweck erfüllen, verbunden werden.

Weitere Vorteile und Merkmale des erfindungsgemässen Verfahrens und der erfindungsgemässen Vorrichtung ergeben sich aus den Unteransprüchen sowie den nun folgenden Ausführungsbeispielen, welche anhand der Zeichnung erläutert werden. Die Ausführungsbeispiele werden anhand der konkreten Verwendung an einem mehrstufigen Verdichter erläutert. Selbstverständlich sind alle Ausführungsbeispiele einschließlich ihrer Weiterentwicklungen auch auf den allgemeinen Fall eines Druckgassystems gemäß Anspruch 1 übertragbar. Diese Verallgemeinerungen der Ausführungsbeispiele sind hiermit auch explizit mitumfasst.

In der Zeichnung zeigen:

Fig. 1:   eine schematische Darstellung eines mehrstufigen Verdichters mit einem Sammelraum für Kondensat, der sich bei einem Unterdruck befinden kann, aus welchem mittels eines konventionellen Kondensatableiters angesammeltes Kondensat abgeleitet wird.,

Fig. 2:   eine schematische Darstellung desselben mehrstufigen Verdichters, wobei zum Ableiten des Kondensats aus dem fraglichen Sammelraum ein erfindungsgemäßer Kondensatableiter verwendet wird, und

Fig 3:   eine Weiterbildung des Kondensatableiters aus Fig. 2, mittels welcher ein Ableiten auch aus einem unter Unterdruck stehenden Sammelraum möglich ist.

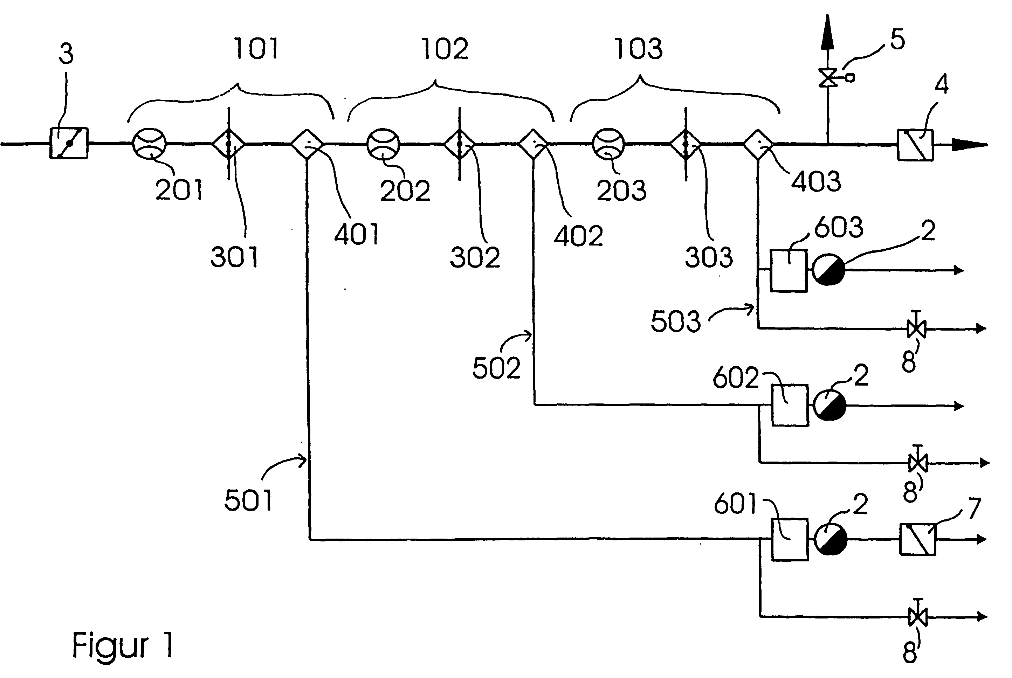

Fig. 1 zeigt einen dreistufigen Druckgasverdichter mit Kondensatableitern 6 gemäss dem Stand der Technik, wobei jede Verdichterstufe 1.n eine Verdichtereinheit 2.n, einen Nachkühler 3.n und einen Abscheider 4.n aufweist. Die Verdichtereinheit 2.n kann beispielsweise ein Kompressor und der Nachkühler 3.n beispielsweise ein flüssigkeitsgekühlter Wärmetauscher sein. Im Abscheider 4.n wird das beim Abkühlungsprozess anfallende Kondensat abgeschieden. Jede Verdichterstufe 1.n weist eine Ablaufleitung 5.n auf, welche zu einem Sammelraum 6.n führt, aus welchem Kondensat mittels eines Kondensatableiters 2 abgeleitet werden kann. Ein solcher Kondensatableiter kann beispielsweise dem aus der EP 391 250 bekannten Kondensatableiter 2 entsprechen und einen eigenen Sammelraum aufweisen. Damit ist ein Sammelraum 6.n, welcher der n-ten Verdichterstufe zugeordnet ist, in den an die Ablaufleitung 5.n angeschlossenen Kondensatableiter 2 integriert. Zusätzlich sind in den Ablaufleitungen 5.n Handventile 8 vorgesehen, mittels welchen Kondensat insbesondere aus den Sammelräumen 6.n manuell abgelassen werden kann.

Im Falle der ersten Verdichterstufe 1.1 ist auf der Auslassseite des Kondensatableiters 2 zusätzlich ein Rückschlagventil 7 vorgesehen.

Auf der Ansaugseite der ersten Verdichterstufe 1.1 ist eine Verschlussvorrichtung vorgesehen, mittels welcher der Querschnitt der Ansaugseite der ersten Verdichterstufe verstellt werden kann. Weiterhin ist auf der Auslassseite der dritten Verdichterstufe 1.3 eine Sperrvorrichtung 4 vorgesehen, mittels welcher die Auslassseite des mehrstufigen Verdichters abgesperrt werden kann. Zusätzlich ist auf der Auslassseite der dritten Verdichterstufe 1.3 vor der Sperrvorrichtung 4 eine Ablassvorrichtung 5 vorgesehen, mittels welcher ein auf der Auslassseite der dritten Verdichterstufe 1.3 eventuell vorhandener Überdruck abgelassen werden kann. Vorzugsweise ist die Auslassseite der Ablassvorrichtung 5 mit der Ansaugseite der ersten Verdichterstufe 1.1 verbunden.

Im normalen Lastbetrieb des mehrstufigen Verdichters sind die Verschlussvorrichtung 3 und die Sperrvorrichtung 4 geöffnet sowie die Ablassvorrichtung 5 geschlossen. Wenn es sich um einen Druckluftverdichter handelt, wird auf der Ansaugseite der ersten Verdichterstufe 1.1 Umgebungsluft angesaugt, welche unter Atmosphärendruck p(Luft) steht. In der Verdichtereinheit 2.1 der ersten Verdichterstufe findet eine erste Kompression der angesaugten Luft statt, welche schrittweise in der Verdichtereinheit 2.2 der zweiten Verdichterstufe 1.2 und der Verdichtereinheit 2.3 der dritten Verdichtereinheit 1.3 weiter erhöht wird. Im Lastbetrieb liegen beispielsweise folgende Druckverhältnisse auf den Auslassseiten der jeweiligen Verdichtereinheiten vor:

1. Verdichtereinheit 2.1: p(1) = 1,9 bar
2. Verdichtereinheit 2.2: p(2) = 4,5 bar
3. Verdichtereinheit 2.3: p(3) = 9 bar.

Damit liegt im Lastbetrieb des mehrstufigen Verdichters auf allen Sammelräumen 6.1 bis 6.3 ein über Atmosphärendruck p(Luft) = 1 bar liegender Druck p(1), p(2) und p(3) vor. Somit ist im Lastbetrieb ein Ableiten von Kondensat aus den Sammelräumen 6.1 bis 6.3 mittels konventioneller Kondensatableiter 2 problemlos möglich.

Bei Stillstand der mehrstufigen Verdichtereinheit wird die gesamte Verdichtereinheit von der Auslassseite der dritten Verdichterstufe 1.3 her mit Atmosphärendruck p(Luft) belüftet. Damit liegt in allen Teilen der Anlage, somit auch in den Sammelräumen 6.1 bis 6.3 bzw. den jeweiligen Kondensatableitem 2 Atmosphärendruck p(Luft) vor. In diesem Fall ist damit ein Ableiten von Kondensat mittels der aus der EP 391 250 bekannten Kondensatableiter 2 nicht mehr möglich, da diese einen gewissen Überdruck im Sammelraum benötigen.

Bei Leerlauf wie oben beschrieben wird die Sperrvorrichtung 4 ganz (oder teilweise) und die Verschlussvorrichtung 3 bis auf einen kleinen Querschnitt geschlossen. Die Ablassvorrichtung 5 wird geöffnet, wobei sie auslassseitig mit der Ansaugseite der ersten Verdichterstufe 1.1 verbunden ist. Wird dieser Betriebszustand über einige Minuten aufrechterhalten, so stellen sich neue Drücke p(1), p(2) und p(3) auf den Auslassseiten der Verdichtereinheiten 2.1 bis 2.3 ein:

1. Verdichtereinheit 2.1: p(1) = 0,7 bar
2. Verdichtereinheit 2.2: p(2) = 1,5 bar
3. Verdichtereinheit 2.3: p(3) = 2,1 bar.

Da die Sammelräume 6.2 und 6.3 der zweiten und dritten Verdichterstufen 1.2 und 1.3 sich bei Drücken befinden, die oberhalb Atmosphärendrucks liegen, kann angefallenes Kondensat aus den Sammelräumen 6.2 und 6.3 weiterhin mittels konventioneller Kondensatableiter 2 abgeleitet werden. Jedoch befindet sich der Sammelraum 6.1 der ersten Verdichtereinheit 1.1 auf einem unter Atmosphärendruck liegenden Druck p(1). Würde nun in das Auslassventil 24 des Kondensatableiters 2 der ersten Verdichterstufe 1.1 geöffnet, sobald ein maximaler Füllstand erreicht oder überschritten ist, wie dies bei einem konventionellen Kondensatableiter geschehen würde, liefe kein Kondensat aus dem Sammelraum 6.1 ab. Statt dessen würde Umgebungsluft durch das Auslassventil 24 des entsprechenden Kondensatableiters 2 in den Sammelraum 6.1 und über die Ablaufleitung 5.1 in die erste Verdichterstufe 1.1, insbesondere möglicherweise auch in die Verdichtereinheit 2.1 eindringen. Dabei bestünde die Gefahr, dass im Sammelraum 6.1 befindliches Kondensat in die Verdichterstufe 1.1 mitgerissen wird. Dies könnte schwere Funktionsstörungen und Schäden an der ersten Verdichterstufe 1.1 zur Folge haben.

Um ein Ablassen von Kondensat aus dem Sammelraum 6. 1 der ersten Verdichterstufe 1.1 im Leerlauf des mehrstufigen Verdichters sicher zu verhindern, ist auf der Auslassseite des Kondensatableiters 2 der ersten Verdichterstufe 1.1 ein Rückschlagventil 7 vorgesehen, was ein Ablaufen von Kondensat aus einem unter Unterdruck stehenden Sammelraum 1.1 unmöglich macht. Jedoch kann prinzipiell kein Kondensat mehr aus dem Sammelraum 1.1 abgeleitet werden. Dies gilt sogar für einen gewissen Überdruck im Sammelraum, da das Rückschlagventil 7 für seine Funktion eine Zusatzkraft benötigt, beispielsweise eine Federkraft, die auf das Verschlusselement wirkt.

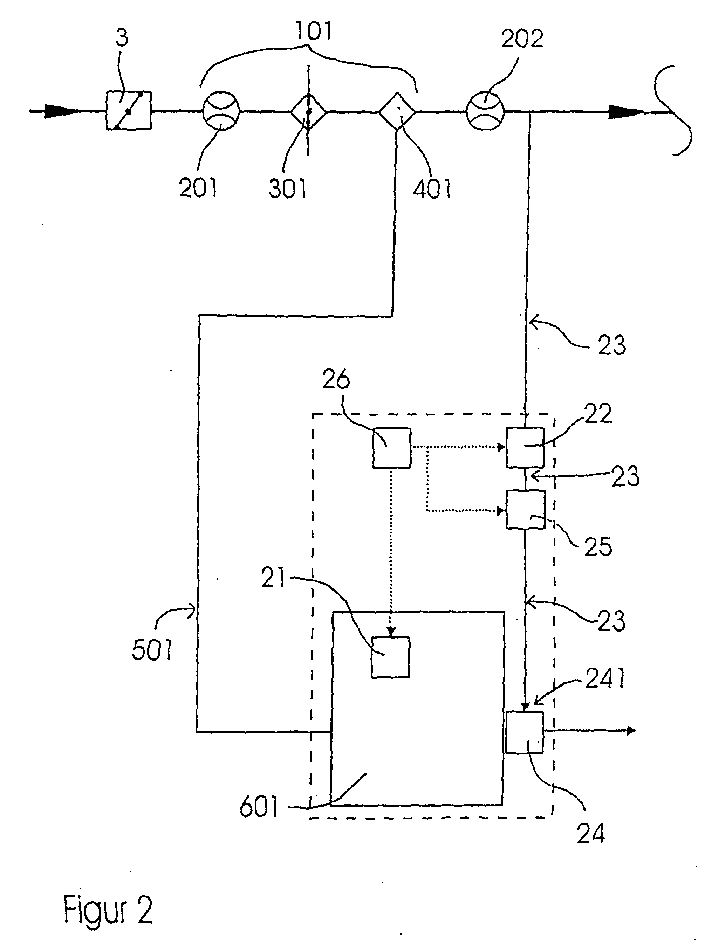

Fig. 2 zeigt ein erstes Ausführungsbeispiel eines erfindungsgemässen Kondensatableiters. Am Ende der Ablaufleitung 5.1 in der ersten Verdichterstufe 1.1 ist ein Sammelraum 6.1 ausgebildet. Dieser Sammelraum 6.1 kann ein speziell ausgebildeter Sammelbehälter sein, der Teil der Druckgasanlage sein kann. Weiterhin ist es auch möglich, das Volumen der Ablaufleitung 5.1 selbst als Sammelraum 6.1 zu nutzen. Schliesslich kann der Sammelraum 6.1 auch Teil des Kondensatableiters 2 selbst sein. Hier sind alle aus dem Stand der Technik vorbekannten Ausführungsformen denkbar. In diesem Sammelraum 6.1 ist ein Füllstandsmesser 21 angeordnet, der dazu vorgesehen ist, den Füllstand an Kondensat im Sammelraum 6.1 zu erfassen. Insbesondere ist der Füllstandsmesser 21 dazu vorgesehen, das Erreichen oder Überschreiten eines maximal zulässigen Füllstands im Sammelraum 6.1 zu erfassen. Mit dem Füllstandsmesser 21 elektrisch verbunden ist eine Elektronikeinheit 26, welche den vom Füllstandsmesser 21 erfassten Füllstand an Kondensat im Sammelraum 6.1 auswertet.

An einem tief gelegenen Punkt des Sammelraums 6.1 ist ein Auslassventil 24 vorgesehen, welches in geöffnetem Zustand ein Ableiten von Kondensat aus dem Sammelraum 6.1 ermöglicht. Das Auslassventil 24 weist einen Steuerleitungseingang 241 auf, welcher über eine Steuerleitung 23 für einen Steuerdruck p(Steuer) mit der Auslassseite der zweiten Verdichtereinheit 2.2 verbunden ist, so dass dieser der Auslassdruck p(2) der zweiten Verdichterstufe entnommen wird. In der Steuerleitung 23 ist ein Steuerventil 22 angeordnet, welches von der Elektronikeinheit 26 angesteuert wird.

Weiterhin ist in der Steuerleitung 23 zwischen dem Steuerventil 22 und dem Steuerleitungseingang 241 des Auslassventils 24 ein Entlüftungsventil 25 angeordnet. Dieses Entlüftungsventil 25 wird so angesteuert, dass es den zwischen dem Steuerventil 22 und dem Auslassventil 24 gelegenen Abschnitt der Steuerleitung 23 in die Atmosphäre entlüftet, wenn das Steuerventil 22 den Durchfluss durch die Steuerleitung 23 absperrt. Dies kann beispielsweise einerseits über eine entsprechende Verbindung mit dem Steuerventil 22 oder durch eine entsprechende Ansteuerung mittels der Elektronikeinheit 26 realisiert werden. Insbesondere kann das Steuerventil 22 so ausgeführt sein, dass es die Funktion des Entlüftungsventils 25 ebenfalls ausübt. Dies kann beispielsweise realisiert werden, indem das Steuerventil als 3/2-Wegeventil ausgeführt wird.

Das Steuerventil 22 ist vorzugsweise als Servoventil ausgelegt, welches magnetisch betätigt wird. Auf diese Weise kann mit kleinen Bedienkräften ein grosser Querschnitt variiert werden.

Das Auslassventil 24 ist so konstruiert, dass es von dem am Steuerleitungseingang 241 anliegenden Druck, dem an seinem Einlass, welcher mit dem Auslass des Sammelraums 6.1 verbunden ist, anliegenden Druck sowie einer zusätzlichen, vorzugsweise mechanischen Betätigungskraft K angetrieben wird. Insbesondere kann das Auslassventil 24 als Membranventil ausgeführt sein, entsprechend dem aus der EP 391 250 bekannten Membranventil. Die zusätzliche Betätigungskraft K entspricht dem Schwellwert P des Verfahrens- und des Vorrichtungsanspruchs.

Dabei ist das Auslassventil 24 so ausgeführt, dass das Auslassventil 24 gesperrt ist, wenn der im Sammelraum 6.1 herrschende Druck p(Sammelraum) + Schwellwert P kleiner ist als der am Steuerleitungseingang 241 anliegende Druck p(Eingang), so dass in diesem Fall also kein Kondensat ablaufen kann.

Wenn dagegen der im Sammelraum 6.1 herrschende Druck p(Sammelraum) + Schwellwert P grösser ist als der am Steuerleitungseingang 241 anliegende Druck p(Eingang), so öffnet das Auslassventil 24 den Auslass des Sammelraums 6.1, so dass im Sammelraum 6.1 befindliches Kondensat ablaufen kann.

Die Elektronikeinheit 26 ist dazu eingerichtet, den vom Füllstandsmesser 21 erfassten Füllstand an Kondensat im Sammelraum 6.1 auszuwerten. Insbesondere ist die Elektronikeinheit 26 dazu eingerichtet, das Steuerventil 22 so anzusteuern, dass bei einem Füllstand von Kondensat im Sammelraum 6.1 unterhalb eines maximal zulässigen Füllstandes das Steuerventil 22 geöffnet ist, so dass über die gesamte Steuerleitung 23 der auslassseitige Druck p(2) der Verdichtereinheit 2.2 zweiten anliegt, damit insbesondere auch am Steuerleitungseingang 241 des Auslassventils 24.

Der Schwellwert P wird vorzugsweise durch eine Feder im Auslassventil 24 realisiert. Der Schwellwert P wird so eingestellt, dass in allen Betriebszuständen (Lastbetrieb, Leerlauf) des mehrstufigen Verdichters stets gilt:

$$p(\text{Sammelraum}) + P < p(\text{Steuer}),$$

und

$$p(\text{Sammelraum}) + P < p(\text{Luft}), \text{ wenn } p(\text{Sammelraum}) = p(\text{Unter}), \text{ vorzugsweise}$$

$$p(Sammelraum) < p(Luft), \text{ bzw.}$$

$$p(Sammelraum) + P > p(Luft), \text{ wenn } p(Sammelraum) \geq p(Luft), \text{ insbesondere}$$

$$p(Sammelraum) = p(\ddot{U}ber).$$

Weiterhin kann auch der Steuerdruck p(Steuer) angepasst an einen vorgegebenen Schwellwert P gewählt werden. In diesem Ausführungsbeispiel kann der Steuerdruck p(Steuer) der Auslassseite einer geeigneten Verdichterstufe (1.j) entnommen werden, wobei nicht zwangsläufig gelten muss:

$$j = i+1$$

Aus der zweiten Bedingung (2. Variante) ergibt sich, dass der Schwellwert P, d.h. hier die Feder 242, das Auslassventil 24 geöffnet hält, wenn an allen Stellen des Auslassventils 24 Atmosphärendruck herrscht.
D.h. liegt am Steuerleitungseingang 241 des Auslassventils 24 der Steuerdruck p(Steuer) an, so ist das Auslassventil 24 stets geschlossen. Liegt dagegen am Steuerleitungseingang 241 Atmosphärendruck p(Luft) an, so ist das Auslassventil 24 entweder:

- geöffnet, wenn im Sammelraum 6.1 ein Druck p(Sammelraum) herrscht, der Atmosphärendruck p(Luft) oder dem Gleichgewichtsüberdruck p(Über) im Lastbetrieb entspricht., oder
- geschlossen, wenn im Sammelraum 6.1 ein Druck p(Sammelraum) herrscht, der dem Gleichgewichtsunterdruck p(Unter) im Leerlaufbetrieb entspricht.

Bezogen auf das konkrete Ausführungsbeispiel bedeutet dies:
Ist der Füllstand von Kondensat im Sammelraum 6.1 kleiner als der maximal zulässige Füllstand, so liegt am Steuerleitungseingang 241 des Auslassventils 24 der Steuerdruck p(Steuer) an, der im wesentlichen durch den auslassseitigen Druck p(2) der Verdichtereinheit 2.2 der zweiten Verdichterstufe 1.2 gegeben ist. Andererseits liegt auf der Einlassseite des Auslassventils 24 der Gasdruck p(Sammelraum) im Sammelraum 6.1 an, welcher im wesentlichen dem auslassseitigem Gasdruck p(1) der ersten Verdichterstufe 2.1 entspricht. Am Steuerleitungseingang 241 liegt der Steuerdruck

$$p(Eingang) = p(Steuer) = p(2) \neq p(Luft)$$

an. Durch die voranstehend beschriebene Wahl des Schwellwertes P ist sichergestellt, dass in allen Betriebszuständen des mehrstufigen Verdichters stets gilt:

$$p(Sammelraum) + P < p(Steuer),$$

wobei unter Betriebszuständen der Leerlauf- und der Lastbetrieb, nicht aber der Abschaltzustand des mehrstufigen Verdichters zu verstehen sind. Damit bleibt das Auslassventil 24 geschlossen, solange der Füllstand des Kondensats im Sammelraum 6.1 noch nicht das maximal zulässige Niveau erreicht hat.
Bei Erreichen des maximal zulässigen Füllstandes an Kondensat im Sammelraum 6.1, was durch den Füllstandsmesser 21 registriert wird, generiert die Elektronikeinheit 26 ein Stellsignal für das Steuerventil 22, welches dadurch geschlossen wird. Gleichzeitig wird der zwischen dem Steuerventil 22 und dem Auslassventil 24 angeschlossene Abschnitt der Steuerleitung 23 über das Entlüftungsventil 25 auf Atmosphärendruck p(Luft) entlüftet. Damit liegt am Steuerleitungseingang 241 des Auslassventils 24 Atmosphärendruck p(Luft) an.
Im Lastbetrieb des mehrstufigen Verdichters herrscht im Sammelraum 6.1 ein Druck p(Sammelraum), der über Atmosphärendruck liegt. Damit gilt immer:

$$p(Sammelraum) + P > p(Eingang) = p(Luft),$$

da

$$p(1) > p(\text{Luft}).$$

Befindet sich daher der mehrstufige Verdichter im Lastbetrieb, so öffnet das Auslassventil 24 den Auslass des Sammelraums 6.1 sobald ein maximal zulässiger Füllstand im Sammelraum 6.1 erreicht oder überschritten wird, so dass Kondensat aus diesem ablaufen kann.

Ist die gesamte Druckgasanlage abgeschaltet, befinden sich alle Teile der Anlage auf Atmosphärendruck p(Luft), insbesondere also auch der Sammelraum 6.1. Weiterhin liegt Atmosphärendruck am Steuerleitungseingang 241 des Auslassventils 24 an. In diesem Fall gilt daher ebenfalls:

$$p(\text{Sammelraum}) + P > p(\text{Eingang}) = p(\text{Luft}),$$

da

$$p(\text{Sammelraum}) = p(\text{Luft}),$$

so dass das Auslassventil 24 immer für das Ablassen von Kondensat geöffnet ist.

Befindet sich dagegen der mehrstufige Verdichter im Leerlauf, so befindet sich der Sammelraum 6.1 auf einem unterhalb vom Atmosphärendruck p(Luft) liegenden Druck p(Sammelraum), insbesondere auf p(Unter). Es gilt in diesem Fall:

$$p(\text{Sammelraum}) + P < p(\text{Eingang}) = p(\text{Luft}),$$

da

$$p(\text{Sammelraum}) = p(1) < p(\text{Luft}) \text{ und P entsprechend gewählt ist.}$$

Daher bleibt das Auslassventil 24 geschlossen.

Befindet sich der Sammelraum 6.1 bei dem Unterdruck p(Unter), so kann daher durch die beschriebene erfindungsgemäßen Vorrichtung mit Sicherheit verhindert werden, dass das Auslassventil 24 geöffnet wird. Auf diese Weise wird das Eindringen von Außenluft in den Sammelraum 6.1 sowie die damit verbundene erste Verdichterstufe 1.1, insbesondere die erste Verdichtereinheit 2.1, durch den erfindungsgemäßen Kondensatableiter 6 am Auslass des Sammelraums 6.1 hindurch sicher verhindert werden. Somit kann auch kein Kondensat, welches sich im Sammelraum 6. befindet, in die erste Verdichterstufe oder eventuell auch in die zweite Verdichterstufe 1.2 eindringen. Die Sicherheit des mehrstufigen Druckgasverdichters ist somit in allen Betriebszuständen gewährleistet.

Das beschriebene Ausführungsbeispiel der erfindungsgemäßen Vorrichtung führt damit die Einzelschritte des erfindungsgemäßen Verfahrens aus. In den verschiedenen Betriebszuständen des mehrstufigen Verdichters sammelt sich am Abscheider 4.1 anfallendes Kondensat im Sammelraum 6.1 an. Der Füllstand des Kondensats im Sammelraum 6. 1 wird mittels des Füllstandsmessers 21 erfasst. Der vom Füllstandsmesser 21 erfasste Füllstand wird von der Elektronikeinheit 26 ausgewertet. Über die Steuerleitung 23 wird ein Steuerdruck p(Steuer) bereitgestellt, der im wesentlichen dem auslassseitigen Druck p(2) der zweiten Verdichterstufe 1.2 entspricht. Damit liegt der Steuerdruck p(Steuer) stets über dem Druck im Sammelraum p(Sammelraum). Der Steuerdruck p(Steuer) liegt im Betrieb des Druckgassystems stets über Atmosphärendruck. Die Elektronikeinheit 26 stellt am Steuerleitungseingang 241 des Auslassventils 24 einen Druck p(Eingang) bereit, der:

i) im wesentlichen dem Steuerdruck p(Steuer) entspricht, (hier gleich dem auslassseitigen Druck p(2) der zweiten Verdichterstufe 1.2), wenn der maximale Füllstand im Sammelraum 6.1 noch nicht erreicht oder unterschritten ist, oder

ii) im wesentlichen Atmosphärendruck p(Luft) entspricht, wenn der maximale Füllstand im Sammelraum 6.1 erreicht oder überschritten ist.

Die Stellung des dem Sammelraum 6.1 zugeordneten Auslassventils 24, welches zum Ableiten von Kondensat aus dem Sammelraum 6.1 vorgesehen ist, wird durch den Druck p(Sammelraum) im Sammelraum 6.1, den Druck p(Eingang) am Steuerleitungseingang 24 , den Druck auf der Auslassseite des Auslassventils 24, der i.a. Atmosphärendruck beträgt, sowie einem Schwellenwert gesteuert. Dabei ist das Auslassventil 24 für das Ableiten von Kondensat:

iii) geschlossen, wenn (solange) der Druck p(Eingang) über dem Druck p(Sammelraum) im Sammelraum 6.1 plus dem Schwellwert P liegt, wobei der Schwellwert durch die Feder 242 im Auslassventil realisiert wird, d.h.

$$p(\text{Sammelraum}) + P < p(\text{Eingang})$$

und:

iv) geöffnet, wenn der Druck p(Eingang) am Steuerleitungseingang 241 unter dem Druck p(Sammelraum) im Sammelraum 6.1 plus dem Schwellwert P liegt, d.h.

$$p(\text{Sammelraum}) + P > p(\text{Eingang})$$

Insbesondere wird das erfindungsgemäße Verfahren durch den Kondensatableiter gemäß des Ausführungsbeispiels so ausgeführt, dass der Schwellwert P, der vorzugsweise durch eine Feder 242 im Auslassventil 24 realisiert wird, so gewählt ist, dass in allen Betriebszuständen (wie vor) des mehrstufigen Verdichters stets gilt:

$$p(\text{Sammelraum}) + P < p(\text{Steuer}),$$

und

$$p(\text{Sammelraum}) + P < p(\text{Luft}), \text{ wenn } p(\text{Sammelraum}) = p(\text{Unter}) \text{ bzw.}$$

$$p(\text{Sammelraum}) + P > p(\text{Luft}), \text{ wenn } p(\text{Sammelraum}) = p(\text{Über}).$$

Als zusätzliche Sicherheitsmassnahme kann vorgesehen werden, dass die Elektronikeinheit 26 einen Wechsel des Betriebszustands von Lastbetrieb zu Leerlauf und umgekehrt erfasst. Bei einem solchen Wechsel des Betriebszustands wechselt der Druck im Sammelraum von einem Gleichgewichtswert z.B. p(Über) in einen anderen, z. B. p(Unter). Unter Umständen können dabei Drücke im Sammelraum 6.1 auftreten, bei denen mit dem erfindungsgemäßen Verfahren und dem erfindungsgemäßen Kondensatableiter nicht unter allen Umständen verhindert werden kann, dass das Auslassventil 24 öffnet, obwohl sich der Sammelraum 6.1 bei einem Unterdruck befindet. Um dies zu verhindern, kann vorgesehen werden, dass die Elektronikeinheit 26 das Steuerventil 22 auch bei Erreichen des maximalen Füllstands an Kondensat im Sammelraum 6.1 solange nicht schließt, bis die Gleichgewichtsdrücke p(Über) resp. p(Unter) im wesentlichen wieder erreicht sind.

Dies kann insbesondere mittels Erfassung des tatsächlichen Drucks im Sammelraum 6.1 mittels eines weiteren Drucksensors realisiert werden. Insbesondere ist die Elektronikeinheit 26 so ausgelegt, dass nur bei Vorliegen eines solchen Drucks im Sammelraum, bei welchem eine sichere Funktion des erfindungsgemäßen Verfahrens gewährleistet ist, das Steuerventil 22 betätigt wird.

Alternativ kann diese auch Steuerung mittels einer Zeitschaltung verwirklicht werden. Die Zeitkonstanten werden dabei vorzugsweise an die technischen Gegebenheiten des mehrstufigen Verdichters angepasst gewählt.

In einer vorteilhaften Weiterbildung der erfindungsgemäßen Vorrichtung ist die Elektronikeinheit 26 dahingehend weitergebildet, dass sie den Betriebszustand des mehrstufigen Verdichters erfasst, wenn der maximale Füllstand an Kondensat im Sammelraum 6.1 erreicht wird, so dass prinzipiell ein Ableiten des Kondensats aus dem Sammelraum 6.1 erforderlich wäre. Aufgrund der beschriebenen Ausführung der erfindungsgemäßen Vorrichtung ist dies jedoch nicht möglich, da sich der Sammelraum 6.1 auf einem Unterdruck, insbesondere p(Unter), befindet. Um das Auftreten eines kritischen Betriebszustandes des mehrstufigen Verdichters zu vermeiden, ist die Elektronikeinheit 26 dazu ausgebildet, in diesem Falle eine Fehlermeldung auszugeben. Diese Fehlermeldung kann beispielsweise dazu verwendet werden, den mehrstufigen Verdichter abzuschalten oder auch den Lastbetrieb wieder herzustellen, so dass sich im Sammelraum 6.1 mindestens Atmosphärendruck p(Luft) oder auch ein darüberliegender Druck einstellt. Damit ist ein sicheres Ableiten des Kondensats aus dem Sammelraum 6.1 möglich.

Bei den meisten Anwendungen fällt im Leerlaufbetrieb des Verdichters am Abscheider 4.1 der ersten Verdichterstufe nur wenig Kondensat an, so dass die bisher beschriebene Ausführungsform eine zuverlässige Lösung darstellt. Der beschriebene Problemfall, dass im Sammelraum 6.1 im Leerlauf soviel Kondensat angesammelt wird, dass der maximal zulässige Füllstand überschritten wird, ist daher i. a. unwahrscheinlich. Dies kann dazu verwendet werden, auf einfache Weise eine weitere Alarmmeldung zu generieren, die einen unerwarteten Anfall von Kondensat oder einer anderen Flüssigkeit, z.B. Kühlwasser im Sammelraum 6.1 anzeigt. Mittels eines im Sammelraum angeordneten Druckmessers wird der Druck p(Sammelraum) erfasst. Befindet sich der Sammelraum auf einem Unterdruck p (Unter), welcher ein Indikator für einen Leerlaufbetrieb des mehrstufigen Verdichters ist, und wird gleichzeitig vom Füllstandsmesser 21 ein Erreichen oder Überschreiten des maximal zulässigen Füllstands im Sammelraum 6.1 gemeldet, so wird von der entsprechend weitergebildeten Elektronikeinheit 26 eine Alarmmeldung ausgegeben. Da im Leerlaufbetrieb nur wenig Kondensat im Sammelraum 6.1 anfallen dürfte, kann ein starker Flüssigkeitsanfall im Sammelraum 6.1 als Fehler im mehrstufigen Verdichter, z.B. als Kühlwasserleckage angesehen werden. Dieses Verfahren kann noch optimiert werden, wenn das Volumen des Sammelraum 6.1 so groß gewählt wird, dass es in praktisch allen Fällen ausreicht, um die geringe Menge an Kondensat aufzunehmen, welche im Leerlaufbetrieb des mehrstufigen Verdichters maximal anfallen kann. Die nötige Dimensionierung kann durch Berechnung dieser Kondensatmenge aus dem umlaufenden Druckgasvolumen abgeschätzt werden.

Weiterhin kann eine Alarmmeldung generiert werden, wenn nach Erreichen oder Überschreiten des maximal zulässigen Füllstands im Sammelraum 6.1 das Steuerventil 22 auf die beschriebene Weise angesteuert wird, jedoch innerhalb einer voreingestellten Zeit der maximale Füllstand nicht wieder unterschritten wird. Dies deutet ebenfalls auf einen Fehler im mehrstufigen Verdichter hin, beispielsweise eine Verstopfung des Auslassventils 24 und damit verbundener Ablaufbereiche oder auch einen starken Kühlwasseranfall. Da das Auslassventil erfindungsgemäß nicht öffnet, wenn sich der Sammelraum auf dem Unterdruck p(Unter) befindet, kann die Störmeldung unterdrückt werden, wenn der im Sammelraum angeordnete Druckmesser das Vorliegen eines Unterdrucks im Sammelraum 6.1 meldet.

Sollte jedoch in besonderen Anwendungsfällen auch im Leerlauf eines mehrstufigen Verdichters ein hoher Kondensatanfall am Abscheider 4.1 der ersten Verdichterstufe oder den nächsten nachfolgenden Verdichterstufen auftreten, so kann das erfindungsgemäße Verfahren und die erfindungsgemäße Vorrichtung auf einfache Weise weitergebildet werden, so dass auch im Leerlaufzustand ein sicheres Ableiten des Kondensats aus dem Sammelraum 6.1 der ersten Verdichterstufe bzw. den Sammelräumen der nächsten Verdichterstufen möglich ist. Dazu wird das erfindungsgemäße Verfahren dergestalt weitergebildet, dass bei Erreichen oder Überschreiten des maximal zulässigen Füllstands im Sammelraum 6.1, welcher sich auf einem unter Atmosphärendruck liegenden Druck p(Sammelraum) befindet, der Zulauf zum Sammelraum 6.1 über die Sammelleitung 5.1 für Kondensat gasdicht abgesperrt wird. Gleichzeitig wird der Sammelraum mit einem Druck beaufschlagt, welcher mindestens, insbesondere genau Atmosphärendruck oder einem darüber liegenden Überdruck oder einen darüber liegenden Überdruck entspricht.

Somit liegt auch im Leerlaufbetrieb des mehrstufigen Verdichters ein mindestens Atmosphärendruck entsprechender Druck p(Sammelraum) im Sammelraum 6.1 vor. Zusammenwirkend mit dem Verfahren des Hauptanspruchs ist damit auch im Leerlaufbetrieb des mehrstufigen Verdichters ein problemloses Ableiten des im Sammelraum 6.1 befindlichen Kondensats möglich. Zusätzlich kann dieses Verfahren und die im folgenden beschriebene Vorrichtung hierzu auch vorteilhaft mit konventionellen Kondensatableitern zum Ableiten von Kondensat aus unter einem Unterdruck stehenden Sammelraum eingesetzt werden.

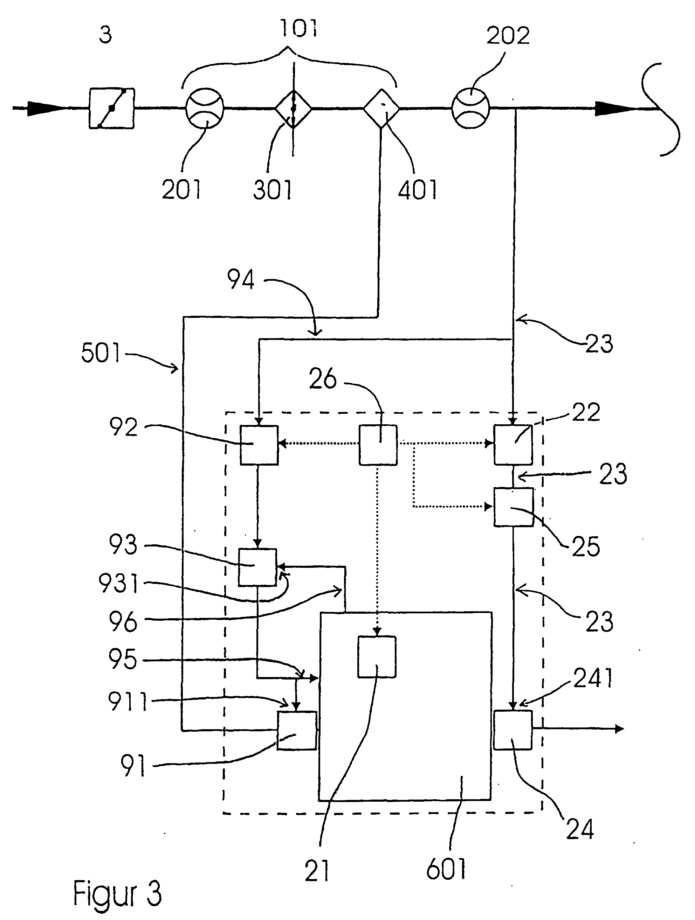

Die dazu erforderliche Weiterbildung ist aus Fig. 3 ersichtlich. Eine Servoleitung 94, welche von der Steuerleitung 23 zwischen dem Steuerventil 22 und der Auslassseite der Verdichtereinheit 2.2 der zweiten Verdichterstufe 1.2 abzweigt, führt zum Servoleitungseingang 911 einer Zulaufsperre 91, welche in der Ablaufleitung 5.1 vor dem Sammelraum 6.1 angeordnet ist.

Diese Zulaufsperre 91 sperrt den Zulauf von Kondensat in den Sammelraum 6.1 über die Sammelleitung 5.1, wenn an ihrem Servoleitungseingang 911 ein Servodruck p(Servo) anliegt. Ganz allgemein wird als Servodruck mindestens Atmosphärendruck, vorzugsweise jedoch ein Überdruck verwendet. In diesem Ausführungsbeispiel wird der auslassseitige Druck p(2) der zweiten Verdichtereinheit 2.2 als Servodruck p(Servo) verwendet.

Zwischen dem Abzweig von der Steuerleitung 23 und der Zulaufsperre 91 ist eine Differenzdrucksperre 93 in der Servoleitung 94 angeordnet. Diese Differenzdrucksperre 93 weist einen Steuerleitungseingang 931 auf und ist so ausgelegt, dass sie die Servoleitung 94 sperrt, falls am Steuerleitungseingang 931, welcher mit dem Gasraum des Sammelraums 6.1 über eine zweite Steuerleitung 96 verbunden ist, ein unter Atmosphärendruck liegender Unterdruck, insbesondere p(Unter), anliegt.

Zwischen der Differenzdrucksperre 93 und der Zulaufsperre 91 ist eine Verzweigung in der Servoleitung 94 vorgesehen. Von dieser Verzweigung führt eine Belüftungsleitung 95 zum Gasraum des Sammelraums 6.1. Über die Belüftungsleitung 95 kann der Sammelraum 6.1 mit dem Servodruck p(Servo) beaufschlagt werden, der hier bereits konstruktionsbedingt mindestens Atmosphärendruck p(Luft) beträgt.

Weiterhin ist in der Servoleitung 94 zwischen der Differenzdrucksperre 93 und dem Abzweig von der Steuerleitung 23 ein Servoventil 92 angeordnet, welches von der Elektronikeinheit 26 angesteuert wird. Dabei ist die Ansteuerung der Steuerelektronik 26 so ausgeführt, dass das Servoventil 92 den Zufluss des Servodrucks p(Servo) zur Differenzdrucksperre 93 durch die Servoleitung 94 sperrt, wenn der maximale Füllstand an Kondensat im Sammelraum 6.1 (noch) nicht erreicht ist. Gleichzeitig entlüftet das Servoventil 92 den zwischen ihm und der Differenzdrucksperre 93 gelegenen Bereich der Servoleitung 94 auf Atmosphärendruck. Vorzugsweise ist das Servoventil 92 wiederum als 3/2-Wegeventil ausgeführt. Damit liegt kein Servodruck an der Differenzdrucksperre 93 und damit auch kein Servodruck an der Zulaufsperre 91 an. D.h. ist der maximale Füllstand an Kondensat im Sammelraum 6.1 (noch) nicht erreicht oder überschritten, so bleibt die Zulaufsperre 91 geöffnet und der Sammelraum 6.1 wird nicht über die Belüftungsleitung 95 mit dem Servodruck p(Servo) [=p(2)] belüftet.

Wird dagegen der maximale Füllstand erreicht, so öffnet das Servoventil 92 von der Elektronikeinheit 26 angesteuert den Zufluss des Servodrucks p(Servo) zur Differenzdrucksperre 93.

Befindet sich der Sammelraum 6.1 auf einem Überdruck, insbesondere auf dem Druck p(Über), so bleibt die Differenzdrucksperre 93 für den Zufluss des Servodrucks p(Servo) zur Zulaufsperre 91 über die Servoleitung 94 und zum Gasraum des Sammelraums 6.1 über die Belüftungsleitung 95 geschlossen. Damit bleibt die Zulaufsperre 91 geöffnet, es kann weiterhin Kondensat über die Ablaufleitung 5.1 dem Sammelraum 6.1 zufließen, ebenso verbleibt der Sammelraum 6.1 auf einem Druck, welcher im wesentlichen dem auslassseitigen Druck der ersten Verdichtereinheit 2.1 entspricht.

Befindet sich der Sammelraum 6.1 dagegen auf einem Unterdruck, insbesondere auf dem Druck p(Unter), so öffnet die Differenzdrucksperre 93 den Zufluss des Servodrucks p(Servo) zur Zulaufsperre 91 über die Servoleitung 94 und zum Gasraum des Sammelraums 6.1 über die Belüftungsleitung 95. Damit wird die Zulaufsperre 91 geschlossen, es kann kein weiteres Kondensat über die Ablaufleitung 5.1 dem Sammelraum 6.1 mehr zufließen. Der Sammelraum 6.1 wird über die Belüftungsleitung 95 mit dem Servodruck p(Servo) belüftet, welcher im wesentlichen dem auslassseitigen Druck der zweiten Verdichtereinheit 2.1 entspricht. Bei entsprechender Auslegung der Ventil- und Leitungsquerschnitte kann damit ein rascher Druckanstieg im Sammelraum 6.1 mindestens auf Atmosphärendruck p(Luft), insbesondere aber auf den auslassseitigen Druck p(2) der zweiten Verdichtereinheit (2.2), realisiert werden. Damit ist aber, wie voranstehend ausgeführt, ein Ableiten von Kondensat aus dem Sammelraum 6.1 mittels des erfindungsgemäßen Verfahrens und einem erfindungsgemäßen Kondensatableiter problemlos möglich.

Vorzugsweise wird die Ansteuerung des Servoventils 92 durch die Elektronikeinheit 26 so weitergebildet, dass bei Erreichen oder Überschreiten des maximal zulässigen Füllstands im Sammelraum 6.1 der Zufluss des Servodrucks p(Servo) zur Differenzdrucksperre 93 so lange geöffnet bleibt, bis das angesammelte Kondensat vorzugsweise vollständig aus dem Sammelraum 6.1 abgelaufen ist. Zu diesem Zweck können wiederum alle bereits im Zusammenhang mit sensorgesteuerten Kondensatableitern bekannten Verfahren wie z.B. Erfassung eines unteren Füllstands, Zeitschaltuhr etc. vorteilhaft angewendet werden.

## Patentansprüche

1. Verfahren zum Ableiten von Kondensat aus einem irgendwie gearteten Sammelraum (6.1), in welchem in einem Druckluft- oder Druckgassystem anfallendes Kondensat gesammelt wird, der hierzu beispielsweise über eine Ablaufleitung (5.1) für Kondensat mit einem Abscheider (4.1) des Druckgassystems verbunden ist, wobei der Sammelraum (6.1) mit einem Gasdruck p(Sammelraum) beaufschlagt ist, der je nach Betriebszustand des Druckgassystems bei einem unter Atmosphärendruck p(Luft) liegenden Unterdruck p(unter), bei einem über Atmosphärendruck p(Luft) liegenden Überdruck p(über) oder bei Atmosphärendruck p(Luft) selbst liegen kann, wobei das Verfahren die folgenden Verfahrensschritte umfasst:

   a) Sammeln von Kondensat im Sammelraum (6.1),
   b) Erfassen des Füllstands von Kondensat im Sammelraum (6.1) mittels eines Füllstandsmessers (21) und einer nachgeschalteten Elektronikeinheit (26),
   c) Bereitstellen eines Steuerdrucks p(Steuer), der in allen Betriebszuständen des Druckgassystems über dem Druck p(Sammelraum) im Sammelraum (6.1) und über Atmosphärendruck p(Luft) liegt,
   d) von der Elektronikeinheit (26) gesteuertes Bereitstellen eines Drucks p(Eingang) an einem Steuerleitungseingang (241) eines dem Sammelraum (6.1) zugeordneten Auslassventils (24), welches dazu vorgesehen ist, im Sammelraum (6.1) angesammeltes Kondensat abzuleiten,

   wobei der Druck p(Eingang):

   i) im wesentlichen dem Steuerdruck p(Steuer) entspricht, wenn der maximale Füllstand im Sammelraum (6.1) noch nicht erreicht oder noch nicht überschritten ist,
   ii) im wesentlichen Atmosphärendruck p(Luft) entspricht, wenn der maximale Füllstand im Sammelraum (6.1) erreicht oder überschritten ist,

   und wobei die Stellung des Auslassventils (24) vom Druck p(Sammelraum) im Sammelraum (6.1), dem Druck p(Eingang) am Steuerleitungseingang (241), dem Druck auf der Auslassseite des Auslassventils (24), der insbesondere Atmosphärendruck p(Luft) sein kann, und einem Schwellwert P, gesteuert wird, insbesondere das Auslassventil (24) für das Ableiten von Kondensat:

iii) geschlossen wird, wenn der Druck p(Eingang) über dem Druck p(Sanunelraum) im Sammelraum (6.1) plus dem Schwellwert P liegt, und

iv) geöffnet wird, wenn der Druck p(Eingang) unter dem Druck p(Sammelraum)im Sammelraum (6.1) plus den Schwellwert P liegt.

2. Verfahren zum Ableiten von Kondensat gemäß Anspruch 1 **dadurch gekennzeichnet, dass** der Schweliwert P so gewählt ist, dass in allen Betriebszuständen d.h. nicht Abschaltzustand), des Druckgassystems gilt:

a) p(Sammelraum) + P < p(Eingang), wenn p(Eingang) = p(Steuer) b)

i) p(Sammelraum) + P > p(Steuer), wenn p(Eingang) = p(Luft) und p(Sammelraum) $\geq$ p(Luft), insbesondere p(Sammelraum) = p(Über), oder

ii) p(Sammelraum) + P < p(Steuer), wenn p(Eingang) = p(Luft) und p(Sammelraum) = p(Unter), insbesondere p(Sammelraum) < p(Luft).

3. Verfahren gemäß Anspruch 1, **dadurch gekennzeichnet, dass** nach Erreichen oder Überschreiten des maximalen Füllstandes von Kondensat im Sammelraum am Steuerleitungseingang (241) des Sammelraums Atmosphärendruck p(Luft) für eine Dauer T anliegt, wobei T so bemessen ist, dass das im Sammelraum 6.1 angesammelte Kondensat zu großen Teilen, vorzugsweise vollständig, durch das Auslassventil (24) ablaufen kann.

4. Verfahren gemäß Anspruch 1, **dadurch gekennzeichnet, dass** das Druckgassystem ein mehrstufiger Verdichter zur Kompression eines Gases, z.B. Luft, ist, welcher hintereinander geschaltete Verdichterstufen (1.n) aufweist, die von denen die i-te Verdichterstufe (1.i) eine Verdichtereinheit (2.i) und einen Nachkühler (3.i) mit nachgeschaltetem Abscheider (4.i) umfasst, der über eine Ablaufleitung (5.i) für Kondensat mit einem irgendwie gearteten Sammelraum (6.i) verbunden ist, welcher mit einem Gasdruck p(Sammelraum) beaufschlagt ist, der im wesentlichen dem auslassseitigen Gasdruck p(i) der Verdichterstufe (1.i) entspricht, und dass der Steuerdruck p(Steuer) im wesentlichen dem auslassseitigen Druck p(j) der j-ten Verdichterstufe (1.j) entspricht, wobei die j-te Verdichterstufe (1.j) im Betrieb auslassseitig einen höheren Gasdruck p(j) erzeugt als den auslassseitigen Gasdruck p(i) der Verdichterstufe (1.i).

5. Kondensatableiter zum Ableiten von Kondensat aus einem Sammelraum (6.1), in welchem in einem Druckgassystem anfallendes Kondensat gesammelt wird, wobei der Sammelraum (6.1) mit einem Gasdruck p(Sammelraum) beaufschlagt ist, der je nach Betriebszustand des Druckgassystems bei einem unter Atmosphärendruck p(Luft) liegenden Unterdruck p(unter), bei einem über Atmosphärendruck p(Luft) liegenden Überdruck p(über) oder bei Atmosphärendruck p(Luft) selbst liegen kann, wobei der Kondensatableiter die folgenden Komponenten aufweist:

a) einen Füllstandsmesser (21), der dazu vorgesehen ist, den Füllstand von Kondensat im Sammelraum (6.1) zu erfassen, insbesondere das Erreichen oder Überschreiten eines maximalen Füllstands im Sammelraum (6.1),

b) ein Steuerventil (22), welches in einer Steuerleitung (23) angeordnet ist, über die dem Kondensatableiter ein Steuerdruck p(Steuer) zugeführt wird, der in allen Betriebszuständen der Druckgasanlage über dem Druck im Sammelraum p(Sammelraum) liegt, d.h.

p(Steuer) > p(Sammelraum),

in jedem Fall aber über Atmosphärendruck p(Luft) liegt, wobei das Steuerventil (22) dazu vorgesehen ist, den Durchfluss des Steuerdrucks p(Steuer) durch die Steuerleitung (23) zu regeln,

c) ein Auslassventil (24), welches dem Sammelraum (6.1) zugeordnet ist und dazu vorgesehen ist, Kondensat aus dem Sammelraum (6.1) insbesondere gegen den Atmosphärendruck p(Luft) abzuleiten, wobei das Auslassventil (24) so ausgeführt ist, dass es einen Steuerleitungseingang (241) aufweist, welcher über das Steuerventil (22) mit der Steuerleitung (23) verbunden ist, dergestalt dass bei geöffnetem Steuerventil (22) im wesentlichen der Steuerdruck p(Steuer) am Steuerleitungseingang (241) anliegt,

d) ein Entlüftungsventil (25), welches zwischen Steuerventil (22) und Steuerleitungseingang (241) in der Steuerleitung (23) angeordnet ist, und welches bei gesperrtem Steuerventil (22) die Steuerleitung (23) zwischen Steuerventil (22) und Steuerleitungseingang (241) auf Atmosphärendruck p(Luft) entlüftet,

e) eine Elektronikeinheit (26), welche das Signal des Füllstandsmessers (21) auswertet und bei Erreichen oder Überschreiten des maximalen Füllstands im Sammelraum (6.i) das Steuerventil (22) schließt,

wobei das Auslassventil (24) folgende Regelstellungen aufweist:

i) Sperrstellung für Kondensat, wenn der am Steuerleitungseingang (241) anliegende Druck p(Eingang) größer ist als der im Sammelraum (6.i) herrschende Druck p(Sammelraum) plus einem voreingestellten Schwellwert P,
ii) Durchlassstellung für Kondensat, wenn der am Steuerleitungseingang (241) anliegende Druck p(Eingang) kleiner ist als der im Sammelraum (6.i) herrschende Druck p(Sammelraum) plus Schwellwert P.

6. Kondensatableiter gemäß Anspruch 5, **dadurch gekennzeichnet, dass** der Schwellwert P an die Drücke p(Sammelraum), p(Steuer) und p(Luft) angepasst gewählt ist, so dass in allen Betriebszuständen des Druckgassystems gilt:

a) p(Sammelraum) + P < p(Eingang), wenn p(Eingang) = p(Steuer)
b) p(Sammelraum) + P > p(Steuer), wenn p(Eingang) = p(Luft).

7. Kondensatableiter gemäß Anspruch 5, **dadurch gekennzeichnet, dass** der Schwellwert P über eine Feder (242) im Auslassventil (24) realisiert wird, wobei vorzugsweise der Schwellwert P am Auslassventil (24) insbesondere mittels Variation der Stärke der Feder (242) oder ihrer Vorspannung einstellbar ist.

8. Kondensatableiter gemäß Anspruch 5, **dadurch gekennzeichnet, dass** das Auslassventil (24) als vorgesteuertes Membranventil ausgeführt ist.

9. Kondensatableiter gemäß Anspruch 8, **dadurch gekennzeichnet, dass** das Membranventil vom Druck p(Eingang) am Steuerleitungseingang (241), vom Druck p(Sammelraum) im Sammelraum (6.1), vom Druck auf der Auslassseite des Auslassventils (24), der insbesondere Atmosphärendruck p(Luft) sein kann, und von einer zusätzlichen Kraft K angetrieben wird, wobei die Kraft K dem Schwellwert P entspricht.

10. Kondensatableiter gemäß Anspruch 5, **dadurch gekennzeichnet, dass** das Entlüftungsventil (25) in das Steuerventil (22) integriert ist, beispielsweise indem das Entlüftungsventil (25) in Form eines 3/2-Wegeventils ausgeführt ist.

11. Kondensatableiter gemäß Anspruch 5, **dadurch gekennzeichnet, dass** der Füllstandsmesser (21) kapazitiv oder nach dem Schwimmerprinzip arbeitet.

12. Kondensatableiter gemäß Anspruch 5, **dadurch gekennzeichnet, dass** der Sammelraum (6.1) in den Kondensatableiter integriert ist, oder dass der Kondensatableiter einen zusätzlichen eigenen Sammelbehälter aufweist.

13. Kondensatableiter gemäß Anspruch 5, **dadurch gekennzeichnet, dass** das Druckgassystem ein mehrstufiger Verdichter zur Kompression eines Gases, z.B. Luft, ist, welcher hintereinandergeschaltete Verdichterstufen (1.n) aufweist, die von denen die i-te Verdichterstufe (1.i) eine Verdichtereinheit (2.i) und einen Nachkühler (3.i) mit nachgeschaltetem Abscheider (4.i) umfasst, wobei der Kondensatableiter zum Ableiten von Kondensat aus dem irgendwie gearteten Sammelraum (6.i) der i-ten Verdichterstufe (2.i) vorgesehen ist, der über eine Ablaufleitung (5.i) für Kondensat mit dem Abscheider (4.i) verbunden und mit einem Gasdruck p(Sammelraum) beaufschlagt ist, der im wesentlichen dem auslassseitigen Gasdruck p(i) der Verdichterstufe (1.i) entspricht ist, und dass als Steuerdruck p(Steuer) der auslassseitige Druck p(j) der Verdichterstufe (1.j) verwendet wird, wobei die Verdichterstufe (1.j) im Betrieb auslassseitig einen höheren Gasdruck p(j) erzeugt als den auslassseitigen Gasdruck p(i) der Verdichterstufe (1.i).

**Claims**

1. A method of draining condensate from a reservoir (6.1) of any configuration in which condensate produced in a compressed air or compressed gas system is collected and which is connected for this purpose, by way of a drain pipe (5.1) for condensate, to a trap (4.1) of the compressed gas system, the reservoir (6.1) being put under a gas pressure p(reservoir) that may be, depending on the operating condition of the compressed gas system, a negative pressure p(negative) below atmospheric pressure p(air), an excess pressure p(excess) above atmospheric pressure p(air) or at atmospheric pressure p(air), the method involving the following steps:

a) collecting condensate in the reservoir (6.1),

b) acquiring the fill level of condensate in the reservoir (6.1) by means of a level meter (21) and an electronics unit (26) arranged downstream thereof,

c) providing a control pressure p(control) which, in any operating conditions of the compressed gas system, is above the pressure p(reservoir) in the reservoir (6.1) and above atmospheric pressure p(air),

d) providing, under the control of the electronics unit (26), a control conduit input (241) of an exhaust valve (24) which is assigned to the reservoir (6.1) and is intended to drain the condensate collected in the reservoir (6.1) with a pressure p(input)

the pressure p(input)

i) substantially corresponding to the control pressure p(control) when the maximum fill level in the reservoir (6.1) has not yet been reached or has not been exceeded,

ii) substantially corresponding to the atmospheric pressure p(air) when the maximum fill level in the reservoir (6.1) is reached or exceeded,

and wherein the position of the exhaust valve (24) is controlled by the pressure p(reservoir) in the reservoir (6.1), the pressure p(input) at the control conduit input (241), the pressure on the exhaust side of the exhaust valve (24), which more specifically can be atmospheric pressure p(air), and by a threshold value P, more specifically wherein the exhaust valve (24) for draining the condensate

iii) is closed when the pressure p(input) is above the pressure p(reservoir) in the reservoir (6.1) plus the threshold value P and

iv) is opened when the pressure p(input) is below the pressure p(reservoir) in the reservoir (6.1) plus the threshold value P.

2. The method of draining condensate according to claim 1, wherein the threshold value P is selected in such a manner that in any operating conditions, i.e. not in the OFF condition, of the compressed gas system the following applies:

a) p(reservoir) + P < p(input) when p(input) = p(control),

b)

i) p(reservoir) + P > p(control), when p(input) = p(air) and
   p(reservoir) ≥ p(air), more specifically p(reservoir) = p(excess) or

ii) p(reservoir) + P < p(control) when p(input) = p(air), and
   p(reservoir) = p(negative), more specifically p(reservoir) < p(air).

3. The method according to claim 1, wherein, when the maximum fill level of condensate in the reservoir is reached or exceeded, atmospheric pressure p(air) prevails for a period of time T at the control conduit input (241) of the reservoir, T being calculated in such a manner that the condensate collected in the reservoir (6.1) is allowed to discharge for the major part, preferably completely, through the exhaust valve (24).

4. The method according to claim 1, wherein the compressed gas system is a multistage compressor for compressing a gas, e.g., air, which is provided with compressor stages (1.n) connected in series, the $i^{th}$ compressor stage (1.i) having a compressor unit (2.i) and an aftercooler (3.i) with a trap (4.i) arranged downstream thereof, which is connected, via a drain pipe (5.i) for condensate, to a reservoir (6.1) of any configuration and put under a gas pressure p(reservoir) that substantially corresponds to the gas pressure p(i) on the exhaust side of the compressor stage (1.i) and wherein the control pressure p(control) substantially corresponds to the pressure p(j) on the exhaust side of the $j^{th}$ compressor stage (1.j), the $j^{th}$ compressor stage (1.j) producing on the exhaust side thereof, in operation, a gas pressure p(j) which is higher than the gas pressure p(i) on the exhaust side of the compressor stage (1.i).

5. A condensate drain device for draining condensate from a reservoir (6.1) in which condensate produced in a compressed gas system is collected, said reservoir (6.1) being put under a gas pressure p(reservoir) that, depending on the operating condition of the compressed gas system, is at a negative pressure below atmospheric pressure p(air), at an excess pressure p(excess) above atmospheric pressure p(air) or at atmospheric pressure p(air), the condensate drain device being provided with the following component parts:

a) a level meter (21) for acquiring the fill level of condensate in the reservoir (6.1), more specifically for acquiring the condition in which the maximum fill level in the reservoir (6.1) has been reached or exceeded,

b) a control valve (22) arranged in a control conduit (23) via which a control pressure p(control) is delivered to the condensate drain device, said control pressure being above the pressure in the reservoir p(reservoir) under any operating conditions of the compressed gas plant, i.e.,

$$p(control) > p(reservoir),$$

in any case however above atmospheric pressure p(air), the control valve (22) being provided for controlling the flow of the control pressure p(control) through the control conduit (23),

c) an exhaust valve (24) assigned to the reservoir (6.1) and provided for discharging condensate from the reservoir (6.1), more specifically against atmospheric pressure p(air), the exhaust valve (24) being configured in such a manner that it is provided with a control conduit input (241) which is connected to the control conduit (23) by way of the control valve (22) so that, when the control valve (22) is open, the control pressure p(control) substantially prevails at the control conduit input (241),

d) a venting valve (25), which is arranged in the control conduit (23) between control valve (22) and control conduit input (241) and which, when the control valve (22) is closed, vents the control conduit (23) between control valve (22) and control conduit input (241),

e) an electronics unit (26) that interprets the signal of the level meter (21) and closes the control valve (22) when the maximum fill level in the reservoir (6.i) has been reached or exceeded,

the exhaust valve (24) being provided with the following positions of control:

i) a locking position for condensate when the pressure p(input) prevailing at the control conduit input (241) is higher than the pressure prevailing in the reservoir (6.i) p(reservoir) plus a preset threshold value P,

ii) a flow through position for condensate when the pressure prevailing at the control conduit input p(input) is lower than the pressure prevailing in the reservoir (6.i) p(reservoir) plus threshold value P.

6. The condensate drain device according to claim 5, wherein the threshold value P is selected to match the pressures p(reservoir), p(control) and p(air) so that, in any operating conditions of the compressed gas system, the following applies:

a) p(reservoir) + P < p(input), when p(input) = p(control)

b) p(reservoir) + P > p(control), when p(input) = p(air).

7. The condensate drain device according to claim 5, wherein the threshold value P is realized by way of a spring (242) in the exhaust valve (24), the threshold value P at the exhaust valve (24) being preferably settable by varying the force of the spring (242) or its biasing force.

8. The condensate drain device according to claim 5, wherein the exhaust valve (24) is configured as a pilot operated diaphragm valve.

9. The condensate drain device according to claim 8, wherein the diaphragm valve is driven by the pressure p(input) at the control conduit input (241), by the pressure p(reservoir) in the reservoir (6.1), by the pressure on the exhaust side of the exhaust valve (24), which more specifically can be atmospheric pressure p(air), and by an additional force K that corresponds to the threshold value P.

10. The condensate drain device according to claim 5, wherein the venting valve (25) is incorporated in the control valve (22), for example in having the venting valve (25) configured as a 3/2 way valve.

11. The condensate drain device according to claim 5, wherein the level meter (21) is a capacitive or a float actuated level meter.

12. The condensate drain device according to claim 5, wherein the reservoir (6.1) is integrated in the condensate drain device or wherein the condensate drain device is provided with an additional reservoir of its own.

13. The condensate drain device according to claim 5, wherein the compressed gas system is a multistage compressor

EP 1 242 767 B1

for compressing a gas, e.g., air, that is provided with compressor stages (1.n) connected in series, the ith compressor stage (1.i) having a compressor unit (2.i) and an aftercooler (3.i) with a trap (4.i) arranged downstream thereof, the condensate drain device being provided for draining condensate from the reservoir (6.i) of any configuration of the Ith compressor stage (2.i), said reservoir being connected to the trap (4.i) via a drain pipe (5.i) for condensate and being put under a gas pressure p(reservoir) that substantially corresponds to the gas pressure p(i) on the exhaust side of the compressor stage (1.i), and wherein the control pressure p(control) used is the pressure p(j) on the exhaust side of the compressor stage (1.j), the compressor stage (1.j) producing, in operation, on the exhaust side a gas pressure p(j) that is higher than the gas pressure p(i) on the exhaust side of the compressor stage (1.i).

**Revendications**

1. Procédé pour purger le condensat d'un réservoir d'accumulation (6.1) de tout type dans lequel on recueille le condensat qui s'est formé dans un système de gaz ou d'air comprimé et qui est relié à cet effet, par l'intermédiaire d'une canalisation d'écoulement (5.1) pour condensat par exemple, à un séparateur (4.1) du système de gaz comprimé, le réservoir d'accumulation (6.1) étant mis sous pression à une pression de gaz p(réservoir d'accumulation) qui peut être, suivant le mode de fonctionnement du système de gaz comprimé, une dépression p(sous) inférieure à la pression atmosphérique p(air), une surpression p(sur) supérieure à la pression atmosphérique p(air) ou bien une pression égale à la pression atmosphérique p(air), le procédé comportant les étapes suivantes :

   a) recueillir du condensat dans le réservoir d'accumulation (6.1),
   b) déterminer le niveau du condensat dans le réservoir d'accumulation (6.1) au moyen d'un senseur de niveau (21) et d'une unité électronique (26) montée en aval,
   c) prévoir une pression de commande p(commande) qui, dans tous les modes de fonctionnement du système de gaz comprimé, est supérieure à la pression p(réservoir d'accumulation) dans le réservoir d'accumulation (6.1) et à la pression atmosphérique p(air),
   d) prévoir, sous la commande de l'unité électronique (26), une pression p(entrée) à une entrée (241) de la conduite pilote d'un clapet de sortie (24) associé au réservoir d'accumulation (6.1), ce clapet de sortie étant prévu pour purger le condensat recueilli dans le réservoir d'accumulation (6.1),

   où la pression p(entrée) :

   i) correspond sensiblement à la pression de commande p(commande) tant que, dans le réservoir d'accumulation (6.1), le niveau de remplissage est inférieur au niveau maximum ou que celui-ci n'est pas encore atteint,
   ii) correspond sensiblement à la pression atmosphérique p(air) dès que, dans le réservoir d'accumulation (6.1), le niveau de remplissage dépasse le niveau maximum ou que celui-ci est atteint,

   et où la position du clapet de sortie (24) est commandée par la pression p(réservoir d'accumulation) dans le réservoir d'accumulation (6.1), la pression p(entrée) à l'entrée (241) de la conduite pilote, la pression en sortie du clapet de sortie (24) qui peut notamment être égale à la pression atmosphérique p(air), et par un seuil P, où notamment

   iii) on ferme le clapet de sortie (24) pour l'évacuation du condensat quand la pression p(entrée) est supérieure à la pression p(réservoir d'accumulation) dans le réservoir d'accumulation (6.1) plus le seuil P et
   iv) on ouvre le clapet de sortie (24) pour l'évacuation du condensat quand la pression p(entrée) est inférieure à la pression p(réservoir d'accumulation) dans le réservoir d'accumulation (6.1) plus le seuil P.

2. Procédé pour purger du condensat selon la revendication 1, **caractérisé en ce que** le seuil P est choisi de telle sorte que, dans tous les modes de fonctionnement du système de gaz comprimé, c.-à-d. tant qu'il n'est pas mis hors circuit, on a:

   a) p(réservoir d'accumulation) + P < p(entrée) quand p(entrée) = p(commande)
   b)

   i) p(réservoir d'accumulation) + P > p(commande) quand p(entrée) = p(air) et p(réservoir d'accumulation) ≥ p(air), notamment p(réservoir d'accumulation) = p(sur), ou
   ii) p(réservoir d'accumulation) + P < p(commande) quand p(entrée) = p(air) et p(réservoir d'accumulation) = p(sous), notamment p(réservoir d'accumulation) < p(air).

3. Procédé selon la revendication 1, **caractérisé en ce que**, une fois que le niveau maximum de condensat dans le réservoir d'accumulation est atteint ou dépassé, une pression atmosphérique p(air) est appliquée à l'entrée (241) de la conduite pilote du réservoir d'accumulation pendant une durée T, T étant choisi de manière à permettre l'écoulement par le clapet de sortie (24) d'une grande partie, préférentiellement de la totalité, du condensat recueilli dans le réservoir d'accumulation (6.1).

4. Procédé selon la revendication 1, **caractérisé en ce que** le système de gaz comprimé est un compresseur à plusieurs étages destiné à comprimer un gaz, par exemple de l'air, et comportant des étages (1.n) associés en série, l'$i^{ème}$ étage du compresseur (1.i) comprenant un groupe compresseur (2.i) et un refroidisseur final (3.i) avec un séparateur (4.i) monté en aval, ledit refroidisseur final étant relié par une canalisation d'écoulement (5.i) du condensat à un réservoir d'accumulation (6.i) de tout type mis en pression à une pression de gaz p(réservoir d'accumulation) correspondant sensiblement à la pression de gaz p(i) en sortie de l'étage du compresseur (1.i) et que la pression de commande p(commande) correspond sensiblement à la pression en sortie p(j) du $j^{ème}$ étage de compresseur (1.j), le $j^{ème}$ étage de compresseur (1.j) générant en fonctionnement une pression de gaz p(j) en sortie qui est supérieure à la pression de gaz p(i) en sortie de l'$i^{ème}$ étage du compresseur (1.i).

5. Purgeur de condensat destiné à évacuer le condensat d'un réservoir d'accumulation (6.1) dans lequel on recueille le condensat qui s'est formé dans un système de gaz ou d'air comprimé, le réservoir d'accumulation (6.1) étant mis sous pression à une pression de gaz p(réservoir d'accumulation) qui peut être, suivant le mode de fonctionnement du système de gaz comprimé, une dépression p(sous) inférieure à la pression atmosphérique p(air), une surpression p(sur) supérieure à la pression atmosphérique p(air) ou bien une pression égale à la pression atmosphérique p(air), le purgeur de condensat comportant les éléments constitutifs suivants :

a) un senseur de niveau (21) prévu pour mesurer le niveau de condensat dans le réservoir d'accumulation (6.1), notamment pour indiquer quand le niveau maximum dans le réservoir d'accumulation (6.1) est atteint ou dépassé,
b) un clapet pilote (22) disposé dans une conduite pilote (23) par laquelle le purgeur de condensat est alimenté en pression de commande p(commande), cette pression de commande étant, dans tous les modes de fonctionnement du système d'air comprimé, supérieure à la pression régnant dans le réservoir d'accumulation p (réservoir d'accumulation), c.-à-d.

$$p(commande) > p(réservoir\ d'accumulation)$$

et est, dans tous les cas, supérieure à la pression atmosphérique p(air), le clapet pilote (22) étant prévu pour réguler le passage de la pression de commande p(commande) dans la conduite pilote (23),
c) un clapet de sortie (24) qui est associé au réservoir d'accumulation (6.1) et est prévu pour évacuer le condensat du réservoir d'accumulation (6.1), notamment à l'encontre de la pression atmosphérique p(air), le clapet de sortie (24) étant conformé pour comporter une entrée (241) de conduite pilote qui, par l'intermédiaire du clapet pilote (22), est reliée à la conduite pilote (23) de telle sorte que, lorsque le clapet pilote (22) est ouvert, la pression de commande p(commande) est appliquée à l'entrée (241) de la conduite pilote,
d) une soupape de mise à l'air (25) qui est disposée dans la conduite pilote (23) entre le clapet pilote (22) et l'entrée (241) de la conduite pilote et qui, quand le clapet pilote (22) est fermé, met la conduite pilote (23) entre le clapet pilote (22) et l'entrée (241) de la conduite pilote à la pression atmosphérique p(air),
e) une unité électronique (26) qui évalue le signal du senseur de niveau (21) et qui ferme le clapet pilote (22) lorsque le niveau maximum dans le réservoir d'accumulation (6.i) est atteint ou dépassé,

le clapet de sortie (24) comportant les positions de réglage suivantes :

i) position interdisant le passage du condensat quand la pression p(entrée) appliquée à l'entrée (241) de la conduite pilote est supérieure à la pression p(réservoir d'accumulation) régnant dans le réservoir d'accumulation (6.i) plus un seuil P réglé au préalable,
ii) position autorisant le passage du condensat quand la pression p(entrée) appliquée à l'entrée (241) de la conduite pilote est inférieure à la pression p(réservoir d'accumulation) régnant dans le réservoir d'accumulation (6.i) plus le seuil P.

**6.** Purgeur de condensat selon la revendication 5, **caractérisé en ce que** le seuil P est choisi en fonction des pressions p(réservoir d'accumulation), p(commande) et p(air) de sorte que l'on a, dans tous les modes de fonctionnement du système de gaz comprimé :

a) p(réservoir d'accumulation) + P < p(entrée) quand p(entrée) = p(commande)
b) p(réservoir d'accumulation) + P > p(commande) quand p(entrée) = p(air).

**7.** Purgeur de condensat selon la revendication 5, **caractérisé en ce que** le seuil P est réalisé par un ressort (242) prévu dans le clapet de sortie (24), le seuil P au clapet de sortie (24) de préférence étant réglable notamment en variant la force du ressort (242) ou sa précontrainte.

**8.** Purgeur de condensat selon la revendication 5, **caractérisé en ce que** le clapet de sortie (24) est réalisé sous forme de clapet à membrane piloté.

**9.** Purgeur de condensat selon la revendication 8, **caractérisé en ce que** le clapet à membrane est actionné par la pression p(entrée) à l'entrée (241) de la conduite pilote, par la pression p(réservoir d'accumulation) dans le réservoir d'accumulation (6.1), par la pression en sortie du clapet de sortie (24) qui peut notamment être égale à la pression atmosphérique p(air) et par une force supplémentaire F, la force F correspondant au seuil P.

**10.** Purgeur de condensat selon la revendication 5, **caractérisé en ce que** la soupape de mise à l'air (25) est intégrée dans le clapet pilote (22), par exemple en réalisant la soupape de mise à l'air (25) sous forme d'une soupape à 3/2 voies.

**11.** Purgeur de condensat selon la revendication 5, **caractérisé en ce que** le principe de fonctionnement du senseur de niveau (21) est capacitif ou à flotteur.

**12.** Purgeur de condensat selon la revendication 5, **caractérisé en ce que** le réservoir d'accumulation (6.1) est intégré dans le purgeur de condensat ou que le purgeur de condensat comporte un récipient d'accumulation supplémentaire qui lui est propre.

**13.** Purgeur de condensat selon la revendication 5, **caractérisé en ce que** le système de gaz comprimé est un compresseur à plusieurs étages destiné à comprimer un gaz, par exemple de l'air, et comportant des étages (1.n) associés en série, l'ième étage du compresseur (1.i) comprenant un groupe compresseur (2.i) et un refroidisseur final (3.i) avec un séparateur (4.i) monté en aval, le purgeur de condensat destiné à évacuer le condensat du réservoir d'accumulation (6.i) de tout type de l'ième étage du compresseur (2.i) étant prévu, relié par une canalisation d'écoulement (5.i) du condensat au séparateur (4.i) et mis en pression à une pression de gaz p(réservoir d'accumulation) qui correspond sensiblement à la pression de gaz p(i) en sortie de l'étage du compresseur (1.i) et que la pression de commande p(commande) utilisée est la pression p(j) en sortie de l'étage du compresseur (1.j), l'étage du compresseur (1.j) générant en fonctionnement une pression de gaz p(j) supérieure à la pression de gaz p(i) en sortie de l'étage du compresseur (1.i).

Figur 1

101    102    103

3    201    301    401    202    302    402    203    303    403

5    4

603    2    503

502    602    2    8'

501    601    2    7    8'

8'

21

EP 1 242 767 B1

Figur 2

Figur 3